(19) Europäisches Patentamt
European Patent Office
Office européen des brevets

(11) EP 4 367 160 B1

(12) **EUROPEAN PATENT SPECIFICATION**

(45) Date of publication and mention of the grant of the patent:
**16.07.2025 Bulletin 2025/29**

(21) Application number: **22744686.1**

(22) Date of filing: **05.07.2022**

(51) International Patent Classification (IPC):
***C08G 18/75*** (2006.01) ***C08G 18/24*** (2006.01)
***C08G 18/32*** (2006.01) ***C08G 18/67*** (2006.01)
***C08G 18/73*** (2006.01) ***C08G 18/34*** (2006.01)
***C08G 18/28*** (2006.01)

(52) Cooperative Patent Classification (CPC):
**C08G 18/755; C08G 18/246; C08G 18/284; C08G 18/3206; C08G 18/3275; C08G 18/341; C08G 18/348; C08G 18/672; C08G 18/73;**
C08G 2150/20

(86) International application number:
**PCT/EP2022/068538**

(87) International publication number:
**WO 2023/280823 (12.01.2023 Gazette 2023/02)**

(54) **POWDER COATING PRECURSOR CATALYST**

PULVERBESCHICHTUNG UND KRISTALLINER VORLÄUFERKATALYSATOR

REVÊTEMENT EN POUDRE ET CATALYSEUR PRÉCURSEUR CRISTALLIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2021 EP 21183708**

(43) Date of publication of application:
**15.05.2024 Bulletin 2024/20**

(73) Proprietor: **Allnex Netherlands B.V.**
**4612 RB Bergen op Zoom (NL)**

(72) Inventors:
- **BRINKHUIS, Richard Hendrikus Gerrit**
**8011 JX ZWOLLE (NL)**
- **YANG, Pengcheng**
**6822 MA Arnhem (NL)**

(74) Representative: **Neirynck, Katrien Gerda Noëlla**
**Allnex Belgium, S.A.**
**Patent Department**
**Anderlechtstraat 33**
**1620 Drogenbos (BE)**

(56) References cited:
**US-A- 4 602 061** **US-A1- 2021 062 009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 367 160 B1

## Description

BACKGROUND OF THE INVENTION

The invention related to a powder coating composition comprising a crosslinkable composition that is crosslinkable via Real Michael Addition (RMA) and a catalyst system having a precursor P and an activator C and optionally a retarder T; a method for preparing the powder coating composition, a process for coating articles using said powder coating composition, the coated articles and the retarder T and precursor P for use in the catalyst system.

DESCRIPTION OF THE RELATED ART

Powder coatings are dry, finely divided, free flowing, solid materials at room temperature and have gained popularity in recent years over liquid coatings. Powder coatings are generally cured at elevated temperatures between 120°C and 200°C, more typically between 140°C and 180°C. High temperatures are required to provide for sufficient flow of the binder to allow film formation and achieve good coating surface appearance, but also for achieving high reactivity for a crosslinking reaction. At low curing temperatures, one may face reaction kinetics that will not allow short cure times when demanding full mechanical and resistance property development; on the other hand, for systems where a high reactivity of the components may be created, the coatings likely have a poor appearance due to the relatively high viscosity of such systems at such lower temperatures, rapidly increasing further as the cure reaction proceeds: the time-integrated fluidity of such systems is too low to achieve sufficient leveling (see e.g. Progress in Organic Coatings, 72 page 26-33 (2011)). Especially when targeting thinner films, appearance may be limiting. Moreover, very high reactivities may lead to problems due to premature reaction when formulating powder paints in an extruder. In addition, highly reactive formulations may have a limited storage stability.

Patent applications WO 2019/145472 and US 2021/062009 describe powder coating compositions that provide a coating on substrates that are heat-sensitive substrates such as medium density fibre-board (MDF), wood, plastics and certain metal alloys and are able to cure at low temperature. These coating compositions are curable via RMA using a catalyst system having only amorphous compounds.

However, the powder compositions described in the prior art provide coatings that have room for improvement with regard to flexibility, adhesion such as on metal and storage stability.

Therefore, there is still a need for a powder coating composition having good mechanical properties, can cure at low temperatures with a high curing speed and that provide excellent adhesion to substrates, such as metals, and provide a long term storage stability.

**BRIEF SUMMARY OF THE INVENTION**

Present invention addresses one or more of the above problems by providing a powder coating composition as described in claim 1.

Accordingly a first aspect of the invention is related to a powder coating composition a crosslinkable composition and a catalyst system, wherein the crosslinkable composition is formed by a crosslinkable donor component A and a crosslinkable acceptor component B that are crosslinkable by a Real Michael Addition (RMA) reaction via the catalyst system, and which catalyst system is able to catalyze the RMA crosslinking reaction at a curing temperature below 140°C, 130 or even below 120°C, 110 °C or 100°C and preferably at least 70°C, preferably at least 80, 90 or 100°C,

wherein the crosslinkable composition comprises

a) the crosslinkable donor component A having at least 2 acidic C-H donor groups in activated methylene or methine, and

b) the crosslinkable acceptor component B having at least 2 activated unsaturated acceptor groups C=C, which react with component A by Real Michael Addition (RMA) to form a crosslinked network,

and

wherein the catalyst system comprises a (semi) crystalline precursor P; an activator C, and optionally retarder T;

wherein the a (semi) crystalline precursor P is a weak base with a pKa of its protonated form of more than 2, preferably more than 3, more preferably more than 4 and even more preferably at least 5 units lower than that of the activated C-H groups in donor component A; and the activator C can react with P at curing temperature, producing a strong base

(CP) that can catalyze the Michael Addition reaction between A and B;

wherein the **retarder T** is preferably a (semi) crystalline retarder, wherein the retarder T is an acid that has a pKa of more than 2, more preferably more than 3, even more preferably more than 4 or 5 points lower than that of the activated C-H in A, and which upon deprotonation produces a weak base that can react with the activator C, producing a strong base that can catalyse the Michael Addition reaction between the crosslinkable compositions A and B.

In a second aspect, the invention is related to a (semi)crystalline catalyst retarder T or precursor P for use in a catalyst system for crosslinking a crosslinkable composition via a Real Michael Addition (RMA) reaction to obtain a powder coating composition according to any one of the claims 1-18, wherein the catalyst retarder T and/ or precursor P is prepared by:

(ia) reacting HDI with a compound (i) which is a diol and a compound (ii) comprising a hydroxyl carboxylic acid groups to obtain a carboxylic acid based (semi) crystalline retarder T;

(ib) neutralizing the carboxylic acid based (semi) crystalline retarder T to obtain a (semi) crystalline precursor P; or

(iia) reacting HDI with a stoichiometric excess of compound (i) which is a diol to obtain a hydroxyl terminated urethane intermediate;

(iib) reacting the hydroxyl urethane intermediate with a cyclic anhydride to obtain a carboxylic acid based (semi) crystalline retarder T;

(iic) neutralizing the carboxylic acid based (semi) crystalline retarder T to obtain a (semi) crystalline precursor P; or

(iiia) reacting HDI with a compound (i) comprising a diol and a compound (iii) having a hydroxyl and carboxylate ester functional group to obtain a (semi) crystalline urethane ester;

(iiib) hydrolysing the ester groups of the (semi) crystalline urethane ester with a hydroxide to obtain a (semi) crystalline precursor P;

(iiic) optionally acidifying this (semi) crystalline precursor to obtain a crystalline retarder T;

(iva) reacting HDI with compound (i) comprising a diol and a compound (ii) comprising a hydroxyl and a tertiary amine functional group to obtain a tertiary amine based (semi) crystalline precursor P;

(ivb) protonating the tertiary-amine based (semi) crystalline precursor P to obtain a (semi) crystalline retarder T; or

(va) reacting HDI with compound (i) comprising a diol and a compound (ii) comprising a hydroxyl and an acrylate functional group to obtain an acrylate functional (semi) crystalline intermediate;

(vb) reacting the acrylate groups of the acrylate functional (semi) crystalline intermediate with a secondary amine to obtain a tertiary amine functional semi-crystalline precursor P;

(vc) protonating the tertiary-amine based (semi) crystalline precursor P to obtain a (semi) crystalline retarder T.

In a third aspect the invention is related to a method for powder-coating a substrate comprising

a. applying a layer comprising the powder coating composition according to embodiments of the first aspect, to a substrate surface wherein the substrate preferably is a temperature sensitive substrate, preferably MDF, wood, plastic, composite or temperature sensitive metal substrates like alloys and

b. heating to a curing temperature Tcur between 75 and 200°C, preferably between 80 and 180°C and more preferably between 80 and 160, 150, 140, 130 or even 120°C, preferably using infrared heating, wherein the melt viscosity at the curing temperature Tcur is preferably less than 60 Pas, more preferably less than 40, 30, 20, 10 or even 5 Pas;

c. and curing at Tcur for a curing time preferably less than 40, 30, 20,15, 10 or even 5 minutes.

In a fourth aspect the invention is related to articles coated with a powder comprising the powder coating composition according to embodiments of the first aspect, wherein the articles preferably have a temperature sensitive substrate preferably selected from the group of MDF, wood, plastic or metal alloys and wherein preferably the crosslinking density XLD is at least 0.01, preferably at least 0.02, 0.04, 0.07 or even 0.1 mmol/ml (as determined by DMTA) and is preferably lower than 3, 2, 1.5, 1 or even 0.7 mmol.

## Detailed description of the invention

The inventors surprisingly found that a powder coating composition according to the invention whereby the precursor of the catalyst system is (semi) crystalline provides powder coating with very good adhesion properties, such as on metal substrates. In addition the powder coating provides a lower melting viscosity upon application during curing, which gives a better flow behavior and provides a coating with better appearances. The powder coating composition according to the invention also gives crystallization after extrusion which has a positive effect on the storage stability of the powder paints. Without being bound to a theory the plasticization effect (reduction of Tg) in the cured film contributes to improved mechanical properties like flexibility and adhesion on e.g. metals.

In the context of the present invention the term "(semi) crystalline compound" is a compound that has a melting temperature Tm above which the compound is liquid. In the context of the present invention, the "melting temperature" of the (semi) crystalline compound is the temperature at which the compound is completely melted when the compound is present in the composition comprising at least a crosslinkable system and a catalyst system as described in current invention, unless it is specified otherwise in the description below, as the melting temperature of the compound itself. The melting temperature reported herein are determined from Differential Scanning Calorimetry (DSC) using a heating rate of 10 °C/min.

## Brief description of the Figures

**Figure 1.** DSC temperature scan plots for PW2 between -30-210 °C at a rate of 10 °C/min.
**Figure 2.** DSC temperature scan plots for PW5 between -30-210 °C at a rate of 10 °C/min.

## Description of embodiments

### The catalyst system

In embodiments of the first aspect the catalyst system is able to crosslink the crosslinkable composition comprising a crosslinkable donor component A and a crosslinkable acceptor component B via Real Michael Addition (RMA), whereby the catalyst system comprises a (semi) crystalline precursor P and an activator C.

The precursor P is a weak base with a pKa of its protonated form of more than 2, preferably more than 3, more preferably more than 4 and even more preferably at least 5 units lower than that of the activated C-H groups in donor component A. The activator C can react with precursor P at curing temperature, producing a strong base (CP) that can catalyze the Michael Addition reaction between A and B.

The catalyst system may optionally further comprise retarder T, which is preferably (semi) crystalline, and which is an acid that has a pKa of more than 2, more preferably more than 3, even more preferably more than 4 or 5 points lower than that of the activated C-H in A, and which upon deprotonation produces a weak base that can react with the activator C, producing a strong base that can catalyse the Michael Addition reaction between the crosslinkable compositions A and B.

In one embodiment, the (semi) crystalline precursor and/or retarder is partially in a crystalline state and has a melting temperature below 140°C, preferably below 130°C, or 120°C, 110° or even below 100°C such as between 80 and 10°C, preferably between 80 and 120 °C.

In another embodiment, the (semi) crystalline precursor and/or retarder has a melting temperature of the compound itself, i.e. when not present in the coating composition, that is below 145°C, 130 °C, preferably below 120°C, 110° or even below 100°C such as between 80 and 130°C, preferably between 80 and 120 °C. The melting temperature of the (semi) crystalline precursor and/or retarder itself can be slightly higher than the melting temperature when formulated in the paint and thus when present in the coating composition.

In another embodiment, the (semi) crystalline precursor P and the optionally (semi) crystalline retarder T comprise a urethane backbone. The urethane backbone is made by reacting an isocyanate, preferably a diisocyanate with at least a compound (i) having at least two isocyanate reactive groups such as an hydroxyl, and is preferably a diol.

It has surprisingly been found that when (semi) crystalline precursor and optionally retarder have a urethane backbone, and in particular a urethane backbone prepared from hexamethylene diisocyanate (HDI) with a selected diol

and the targeted molecular weight provides a powder coating composition having a suitable melting temperature that recrystallizes after extrusion, has reduced melting viscosity compared to an amorphous precursor/retarder system and provides a coating with better adhesion and flexibility compared to an amorphous precursor/retarder system.

In a preferred embodiment the urethane backbone of the (semi) crystalline precursor and/or retarder is prepared by reacting hexamethylene diisocyanate (HDI) with a compound (i) comprising at least two, preferably two, isocyanate reactive groups, preferably an alcohol, more preferably a diol.

In another preferred embodiment the diol has a connecting chain between the hydroxyl groups that contain ether- or thioether groups (CH2-O-CH2, CH2-S-CH2, CH2-S-S-CH2) and the connection chain has a maximum length of 11 carbon atoms and/or heteroatoms between the hydroxyl groups; or

has a connecting chain between the hydroxyl groups containing a -CH(CH3)- unit or a -CH(CH2CH3)-preferably in a central position, whereby the connecting chain has a chain length that has an uneven number of carbon atoms and/or heteroatoms of less than 6 between the hydroxyl groups;

wherein the hydroxyl groups are primary hydroxyl groups and wherein the diols are not aromatic and not cycloaliphatic.

It has been found that such type of diols may provide a urethane backbone of the (semi) crystalline precursor/retarder that has the desired melting temperature and crystallisation tendency.

Preferably, compound (i) is a diol selected from the group consisting of diethylene glycol; triethylene glycol; 3-methyl 1,5-pentanediol, 2-methyl 1,3-propane diol; thio diethanol; 2, 2'-dithiodiethanol; ; tetraethylene glycol; di(1,3-propanediol); di(1.4-biutanediol).

In another embodiment, the (semi) crystalline retarder and/or precursor comprise a urethane backbone and is prepared by

(ia) reacting HDI with a compound (i) which is a diol and a compound (ii) comprising a hydroxyl carboxylic acid groups to obtain a carboxylic acid based (semi) crystalline retarder T;

(ib) neutralizing the carboxylic acid based (semi) crystalline retarder T to obtain a (semi) crystalline precursor P; or

(iia) reacting HDI with a compound (i) which is a diol to obtain a hydroxyl terminated urethane intermediate;

(iib) reacting the hydroxyl urethane intermediate with a cyclic anhydride to obtain a carboxylic acid based (semi) crystalline retarder T;

(iic) neutralizing the carboxylic acid based (semi) crystalline retarder T to obtain a (semi) crystalline precursor P; or

(iiia) reacting HDI with a compound (i) which is a diol and a compound (iii) having a **hydroxyl carboxylate** ester groups to obtain a (semi) crystalline urethane ester;

(iiib) hydrolysing the ester groups of the (semi) crystalline urethane ester with a hydroxide to obtain a (semi) crystalline precursor P;

(iiic) optionally acidifying the (semi) crystalline precursor of (iiib) to obtain a crystalline retarder T

(iva) reacting HDI with a diol component (i) and a compound (iv) comprising a hydroxyl and a tertiary amine functional group to obtain a tertiary amine based (semi) crystalline precursor P;

(ivb) protonating the tertiary-amine based (semi) crystalline precursor P to obtain a (semi) crystalline retarder T; or

(va) reacting HDI with a diol component (i) and a compound (v) comprising a hydroxyl and an acrylate functional group to obtain an acrylate functional (semi) crystalline intermediate;

(vb) reacting the acrylate groups of the acrylate functional (semi) crystalline intermediate with a secondary amine to obtain a tertiary amine functional semi-crystalline precursor P;

(vc) protonating the tertiary-amine based (semi) crystalline precursorP to obtain a (semi) crystalline retarder T.

The cyclic anhydride used in iib is preferably succinic anhydride or maleic anhydride,

Compound (ii) comprises both a hydroxyl as well as a carboxylic acid group and can e.g. be lactic acid, glycolic acid, hydroxypivalic acid, hydroxy butyric acid.

Compound (iii) comprises hydroxyl and carboxylate ester groups and can e.g. be ethyl lactate, or in general alkyl esters of the hydroxy acids described for compound (ii).

A person skilled in the art will understand that the hydrolyzed (semi) crystalline precursor P can be acidified to obtain a crystalline retarder T.

Compound (iv) comprising a hydroxyl and a tertiary amine functional group can be e.g. dimethyl ethanolamine; In yet another embodiment, the (semi) crystalline precursor is prepared according to the above steps wherein the hydrolysis and/ or neutralization is done with

- hydroxide salt of a cation that is not acidic, preferably a cation according to formula Y(R')4, wherein Y represents N or P, and wherein each R' can be as same or different alkyl, aryl or aralkyl possible linked to a polymer, preferably a quaternary ammonium or phosphonium cation, preferably a tetra-butyl ammonium cation or tetra-ethyl ammonium cation; or
- very strong basic amine, preferably selected from the group of amidines; preferably 1,8-diazabicyclo (5.4.0)undec-7-ene (DBU), or guanidines; preferably 1,1,3,3 - tetramethylguanidine (TMG), optionally in the presence of some water.

In one embodiment, the number average molecular weight of the (semi) crystalline precursor is between 300 and 4000, preferably between 500 and 3000 g/mol, more preferably between 1000 and 2000 g/mol. Preferably an excess of isocyanate reactive groups over isocyanate groups is used. Accordingly, preferably, the ratio of the isocyanate reactive groups of compound (i) and if present compound (ii), (iii), (iv) or (v) in relative to the isocyanate groups is preferably above one. More preferably the molar ratio of the isocyanate reactive groups over isocyanate groups is between 1.0 to 1.5, more preferably from 1.01 to 1.2.

Also disclosed is a (semi) crystalline precursor P or retarder T whereby no compound (i) is used to prepare the urethane backbone.

In one embodiment the powder coating composition according to any one of the preceding claims, wherein the catalyst system is a separated catalyst system wherein the (semi) crystalline precursor P and activator C are macrophysically separated.

According to the invention, the term "macrophysically separated" means that reactable compounds P and C are essentially inaccessible for chemical reaction in the powder coating composition below curing temperature. This is because when preparing the powder coating composition, the semi(crystalline) precursor P and the acceptor C are no melt-mixed (also called extruded) together. This helps providing a powder coating composition with a longer storage time and provides a coating with matting appearances.

In one embodiment, the (semi) crystalline precursor P can be a salt formed by anion and a cation that is not acidic. Not acidic means not having a hydrogen that competes for base with crosslinkable donor component A, and thus not inhibiting the crosslinking reaction at the intended cure temperature. Preferably, the cation is substantially non-reactive towards any components in the crosslinkable composition. The cations can e.g. be alkali metals, quaternary ammonium or phosphonium but also protonated 'superbases' that are non-reactive towards any of the components A, B or C in the crosslinkable composition. Suitable superbases are known in the art.

In yet another embodiment, the catalyst system comprises

- an activator C in an amount between 1 and 600 μeq/gr, preferably between 10 and 400, more preferably between 20 and 200 μeq/gr relative to total weight of binder components A and B and catalyst system,
- a (semi) crystalline precursor P in an amount between 1 and 300 μeq/gr, preferably between 10 and 200, more preferably between 20 and 100 μeq/gr relative to total weight of binder components A and B and catalyst system,
- optionally a retarder T in an amount between 1 and 500, preferably between 10 and 400, more preferably between 20 and 300 μeq/gr and most preferably between 30 and 200 μeq/gr, relative to total weight of binder components A and B and catalyst system
- preferably wherein the equivalent amount of C

    (i) is higher than the amount of T, when present, preferably by an amount between 1 and 300 μeq/gr, preferably between 10 and 200, more preferably between 20 and 100 μeq/gr and
    (ii) is preferably higher than the amount of P and
    (iii) more preferably higher than the sum of the amount of P and T .

In yet another embodiment the catalyst system of the powder coating composition comprises a catalyst system

a. wherein the (semi) crystalline precursor represents between 10 and 100 equivalent % of the sum of P and T ,

b. preferably the amount of retarder T is 20 - 400 eq%, preferably 30 - 300 eq% of the amount of P,

c. wherein preferably the ratio of the equivalent amount of C to the sum of the amount of P and T is at least 0.5, preferably at least 0.8, more preferably at least 1 and preferably at most 3, more preferably at most 2,

d. the ratio of C to T is preferably at least 1, preferably at least 1.5, most preferably at least 2.

In one embodiment, the catalyst system comprises the catalyst activator composition (C) comprising activator C1 that is preferably selected from the group of epoxide, carbodiimide, oxetane, oxazoline or aziridine functional components, preferably an epoxide or carbodiimide.

A most preferred catalyst activator C1 contains an epoxy group. Suitable choices for the epoxide as preferred activator C1 are cycloaliphatic epoxides, epoxidized oils and glycidyl type epoxides. Suitable components C1 are described e.g. in US4749728 Col 3 Line 21 to 56 and include C10-18 alkylene oxides and oligomers and/or polymers having epoxide functionality including multiple epoxy functionality. Particularly suitable mono-epoxides include , tert-butyl glycidyl ether, phenyl glycidyl ether, glycidyl acetate, glycidyl esters of versatic esters, glycidyl methacrylate (GMA) and glycidyl benzoate. Useful multifunctional epoxides include bisphenol A diglycidyl ether, as well as higher homologues of such BPA epoxy resins, glycidyl ethers of hydrogenated BPA, such as Eponex 1510 (Hexion), ST-4000D (Kukdo), aliphatic oxirane such as epoxidised soybean oil, diglycidyl adipate, 1,4-diglycidyl butyl ether, glycidyl ethers of Novolac resins, glycidyl esters of diacids such as Araldite PT910 and PT912 (Huntsman), TGIC and other commercial epoxy resins. Bisphenol A diglycidyl ether, as well as its solid higher molecular weight homologues are preferred epoxides. Also useful are acrylic (co)polymers having epoxide functionality derived from glycidyl methacrylate. In a preferred embodiment, the epoxy components are oligomeric or polymeric components with an Mn of at least 400 (750, 1000, 1500). Other epoxide compounds include 2-methyl-1,2-hexene oxide, 2-phenyl-1,2-propene oxide (alpha-methyl styrene oxide), 2-phenoxy methyl-1,2-propene oxide, epoxidized unsaturated oils or fatty esters, and 1-phenyl propene oxide. Useful and preferred epoxides are glycidyl esters of a carboxylic acid, which can be on a carboxylic acid functional polymer or preferably on a highly branched hydrophobic carboxylic acid like Cardura E10P (glycidyl ester of Versatic™ Acid 10). Most preferred are typical powder crosslinker epoxy components: triglycidyl isocyanurate (TGIC), Araldite PT910 and PT912, and phenolic glycidyl ethers that are solid in nature at ambient temperature, or acrylic (co)polymers of glycidyl methacrylate.

Optionally, in some preferred embodiments, the catalyst system further comprises a retarder T, which is an acid that has a pKa of 2, preferably 3, more preferably 4 and most preferably 5 points lower than that of the activated C-H in the crosslinkable donor component A, and which upon deprotonation produces a weak base that can act as a P1 precursor, and can react with the activator C1, to produce a strong base that can catalyze the Michael Addition reaction between A and B. The retarder T is preferably a protonated precursor P1. The retarder T can be part of the catalyst precursor composition or of the catalyst activator composition. It can also be part of both the catalyst precursor composition and the catalyst activator composition. Preferably the retarder T and the protonated precursor P1 have a boiling point of at least 120°C, preferably 130°C, 150, 175, 200 or even 250°C. Preferably, retarder T is a carboxylic acid. The use of a retarder T can have beneficial effects in postponing the crosslinking reaction to allow more interdiffusion of the components during cure, before mobility limitations become significant.

The retarder is most preferably (semi) crystalline as described above.

The pKa values referred to in this patent application, are aqueous pKa values at ambient conditions (21°C). They can be readily found in literature and if needed, determined in aqueous solution by procedures known to those skilled in the art.

To be able to provide a helpful delay of the crosslinking reaction under cure conditions, the reaction of the retarder T and its deprotonated version P1 with activator C1 should take place with a suitable rate.

A preferred catalyst system comprises as catalyst activator C1 an epoxy, as catalyst precursor P1 a weak base nucleophilic anion group that reacts with the epoxide group of C1 to form a strongly basic adduct C1 , and most preferably also a retarder T. In a suitable catalyst system, P1 is a carboxylate salt and C1 is epoxide, carbodiimide, oxetane or oxazoline, more preferably an epoxide or carbodiimide, and T is a carboxylic acid. Alternatively P1 is a tertiary amine C1 is an epoxy, and T is a carboxylic acid.

Without wishing to be bound to a theory it is believed that the nucleophilic anion P1 reacts with the activator epoxide C1 to give a strong base, but that this strong base is immediately protonated by the retarder T to create a salt (similar in function to P1) that will not directly strongly catalyse the crosslinking reaction. The reaction scheme takes place until substantially complete depletion of the retarder T, which provides for the open time because no significant amount of strong base is present during that time to significantly catalyse the reaction of the crosslinkable components A and B. When the retarder T is depleted, a strong base will be formed and survive to effectively catalyse the rapid RMA crosslinking reaction.

The features and advantages of the invention will be appreciated upon reference to the following exemplary reaction scheme.

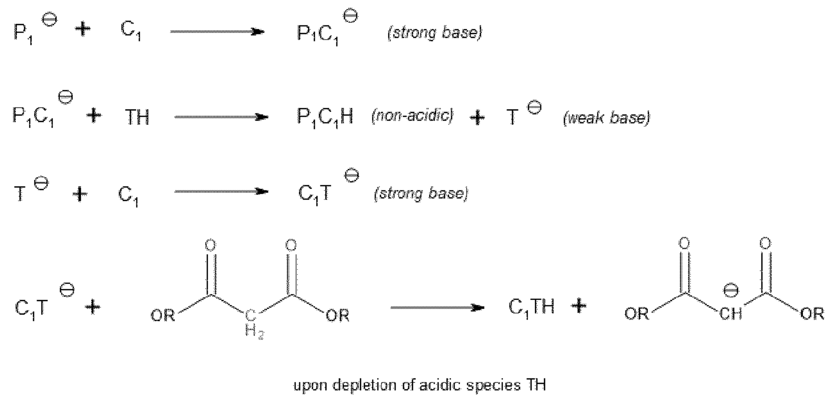


Specifically for the case of carboxylates, epoxides and carboxylic acids as P1, C1 and T species, this can be drawn up as:**replaced the picture**

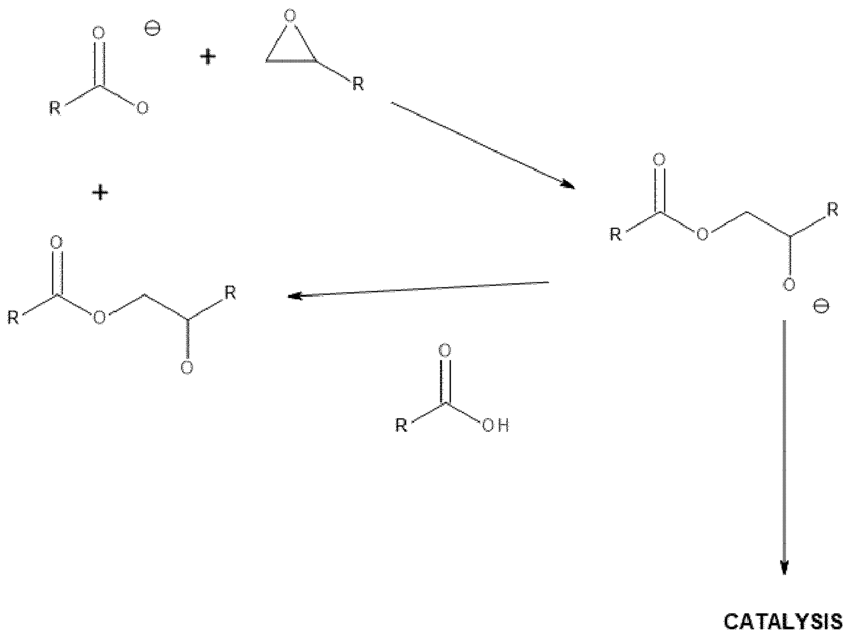


In some cases, the detailed mechanism of the reaction of the activator C1 with the precursor P1 may not be known, or subject of debate, and a reaction mechanism involving the protonated form of P1 actually involved in the reaction may be suggested. The net effect of such a reaction sequence might be similar to the sequence described based on its progress though the deprotonated form of P1. Systems where reaction might be argued to proceed along the protonated P1 pathway, are included in this invention. In this case, after depletion of the retarder T, C1 would react with a protonated P1 created from the acid-base equilibrium with Michael donor species A, and its reaction would activate crosslinking due to this acid-base equilibrium being drawn to the deprotonated Michael donor side.

The reaction scheme, if the activator would react through the protonated form of P1H would be illustrated by the next scheme:

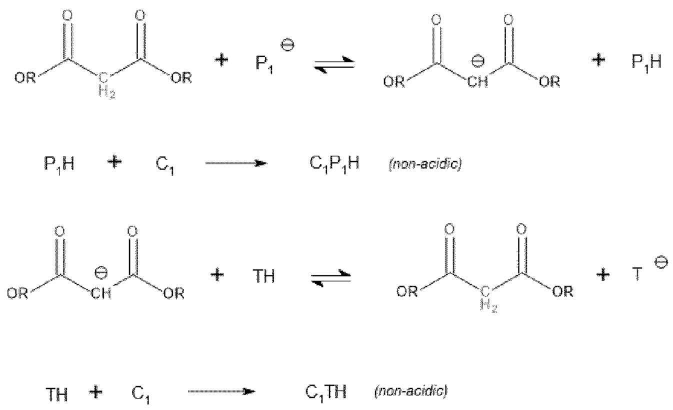


In one embodiment retarder T is a protonated anion group P1, preferably carboxylic acid T and carboxylate P1, which for example can be formed by partially neutralising an acid functional component, preferably a polymer comprising acid groups as retarder T to partially convert to anionic groups on P1, wherein the partial neutralizing is done preferably by a cation hydroxide or (bi)carbonate, preferably tetraalkylammonium or tetraalkylphosphonium cations. In another embodiment, a polymer bound component P1 can be made by hydrolysis of an ester group in a polyester with aforementioned hydroxides.

**Crosslinkable components**

The powder coating composition further comprises the crosslinkable composition comprising

a) the crosslinkable donor component A having at least 2 acidic C-H donor groups in activated methylene or methine, and

b) the crosslinkable acceptor component B having at least 2 activated unsaturated acceptor groups C=C, which react with component A by Real Michael Addition (RMA) to form a crosslinked network,

In one specific embodiment the crosslinkable donor component A and/or the crosslinkable acceptor B are (semi) crystalline compounds, preferably having a urethane backbone, which urethane backbone is preferably prepared by reacting a hexamethylene diisocyanate with a compound comprising at least two isocyanate reactive groups, preferably an alcohol, more preferably a diol.

Preferably, the diol has:

a connecting chain between the hydroxyl groups that contain ether- or thioether groups, preferably - CH2-O-CH2-, -CH2-S-CH2-, -CH2-S-S-CH2- and the connection chain has a maximum length of 11 carbon atoms and/or heteroatoms between the hydroxyl groups; or

a connecting chain between the hydroxyl groups containing a -CH(CH3)- unit or a -CH(CH2CH3)-preferably in a central position, whereby the connecting chain has a chain length that has an uneven number of carbon atoms and/or heteroatoms of less than 6 between the hydroxyl groups;

wherein the hydroxyl groups are primary hydroxyl groups and wherein the diols are not aromatic and not cycloaliphatic.

The diol is preferably selected from the group consisting of diethylene glycol; triethylene glycol; 3-methyl 1,5-pentanediol, 2-methyl 1,3-propane diol; thio diethanol; dithio diethanol ; tetraethylene glycol; di(1.3-propanediol) di(1.4-butanediol).

Without being bound to a theory, it is assumed that when the backbone of the donor component A and/or the crosslinkable acceptor B is similar or the same as that from the crystalline precursor B, a better (co)crystallisation is achieved, even at low concentration.

Therefor in another preferred embodiment the urethane backbone of the (semi) crystalline donor component A and/or the (semi) crystalline acceptor B and the (semi) crystalline precursor (P) have a urethane backbone prepared by the same components, preferably wherein the urethane backbone is prepared by reacting HDI with the same compound (i) having at least two isocyanate reactive groups, preferably a diol as described above.

In this embodiment, preferably, at least the crosslinkable donor component A and/or a at least a crosslinkable acceptor component B are (semi) crystalline and comprise a polyurethane backbone formed by:

reacting a polyisocyanate, which is substantially hexamethylene diisocyanate (HDI), with a compound (i) comprising at least two, preferably two, isocyanate reactive groups, preferably hydroxyls, more preferably is a diol; and

a compound (iia) comprising at least one, preferably 1, isocyanate reactive groups, preferably a hydroxyl and at least one functional group having at least one acidic C-H donor groups in activated methylene or methine, to form a (semi) crystalline donor component A; or

a compound (iib) comprising at least one, preferably 1, isocyanate reactive groups, preferably a hydroxyl and at least one functional group having at least one activated unsaturated acceptor groups C=C, to form the (semi) crystalline acceptor component B.

According to this invention, with "substantially" it is meant that at least 95% of the polyisocyanates that are used is HDI.

In one embodiment the crosslinkable component A comprises at least 2 acidic C-H donor groups in activated methylene or methine in a structure Z1(-C(-H)(-R)-)Z2 wherein R is hydrogen, a hydrocarbon, an oligomer or a polymer, and wherein Z1 and Z2 are the same or different electron-withdrawing groups, preferably chosen from keto, ester or cyano or aryl groups, and preferably comprises an activated C-H derivative having a structure according to formula 1:

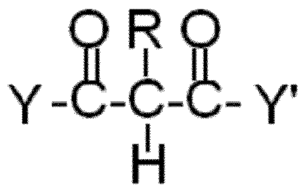

Formula 1

wherein R is hydrogen or an optionally substituted alkyl or aryl and Y and Y' are identical or different substituent groups, preferably alkyl, aralkyl or aryl , or alkoxy or wherein in formula 1 the -C(=O)-Y and/or -C(=O)-Y' is replaced by CN or aryl, no more than one aryl or wherein Y or Y' can be NRR' (R and R' are H or optionally substituted alkyl) but preferably not both, wherein R, Y or Y' optionally provide connection to an oligomer or polymer, said component A preferably being a malonate, acetoacetate, malonamide, acetoacetamide or cyanoacetate groups, preferably providing at least 50, preferably 60, 70 or even 80 % of the total of C-H acidic groups in crosslinkable component A,

b. Component B comprises the at least 2 activated unsaturated RMA acceptor groups preferably originate from acryloyl, methacryloyl, itaconates, maleate or fumarate functional groups,

wherein preferably at least one, more preferably both, of components A or B is a polymer and

wherein preferably the composition comprises a total amount donor groups C-H and acceptor groups C=C per gram binder solids from 0.05 to 6 meq/gr binder solids and preferably the ratio of acceptor groups C=C to donor groups C-H is more than 0.1 and less than 10.

Preferably at least one, more preferably both, of components A or B is a polymer

Preferably, the crosslinkable composition comprises a total amount donor groups C-H and acceptor groups C=C per gram binder solids from 0.05 to 6 meq/gr binder solids and preferably the ratio of acceptor groups C=C to donor groups C-H is more than 0.1 and less than 10.

Real Michael Addition (RMA) crosslinkable coating compositions comprising crosslinkable components A and B are generally described for use in solvent borne systems in EP2556108, EP0808860 or EP1593727 which specific description for crosslinkable components A and B are herewith considered to be enclosed.

The components A and B respectively comprise the RMA reactive donor and acceptor moieties which on curing react to form the crosslinked network in the coating. The components A and B can be present on separate molecules but can also be present on one molecule, referred to as a hybrid A/B component, or combinations thereof.

Preferably, components A and B are separate molecules and each independently in the form of polymers,

oligomers, dimers or monomers. For coating applications, it is preferred at least one of component A or B preferably are oligomers or polymers. It is noted that an activated methylene group CH2 comprises 2 C-H acidic groups. Even though, after reaction of the first C-H acidic group, the reaction of the second C-H acid group is more difficult, e.g. for reaction with methacrylates, as compared to acrylates, the functionality of such activated methylene group is counted as 2. The reactive components A and B can also be combined in one A/B hybrid molecule. In this embodiment of the powder coating composition both C-H and C=C reactive groups are present in one A-B molecule.

Preferably, component A is a polymer, preferably a polyester, polyurethane, acrylic, epoxy or polycarbonate, having as a functional group a component A and optionally one or more components B, or components from catalytic system C. Also, mixtures or hybrids of these polymer types are possible. Suitably component A is a polymer chosen from the group of acrylic, polyester, polyester amide, polyester-urethane polymers.

Malonates or acetoacetates are preferred donor types in component A. In view of high reactivity and durability in a most preferred embodiment of the crosslinkable composition, component A is a malonate C-H containing compound. It is preferred that in the powder coating composition the majority of the activated C-H groups are from malonate, that is more than 50%, preferably more than 60%, more preferably more than 70%, most preferably more than 80% of all activated C-H groups in the powder coating composition are from malonate.

Preferred are oligomeric and/or polymeric malonate group-containing components such as, for example, polyesters, polyurethanes, polyacrylates, epoxy resins, polyamides and polyvinyl resins or hybrids thereof containing malonate type groups in the main chain, pendant or both.

The total amount of donor groups C-H and acceptor groups C=C per gram binder solids, independent of how they are distributed over the various crosslinkable components, is preferably between 0.05 to 6 meq/gr, more typically 0.10 to 4 meq/gr, even more preferably 0.25 to 3 meq/gr binder solids, most preferably between 0.5 to 2 meq/gr. Preferably, the stoichiometry between components A and B is chosen such that the ratio of reactive C=C groups to reactive C-H groups is more than 0.1, preferably more than 0.2, more preferably more than 0.3, most preferably more than 0.4, and, in the case of acrylate functional groups B preferably more than 0.5 and most preferably more than 0.75, and the ratio is preferably less than 10, preferably 5, more preferably less than 3, 2 or 1.5.

The malonate group-containing polyesters can be obtained preferably by the transesterification of a methyl or ethyl diester of malonic acid, with multifunctional alcohols that can be of a polymeric or oligomeric nature but can also be incorporated through a Michael Addition reaction with other components. Especially preferred malonate group-containing components for use with the present invention are the malonate group-containing oligomeric or polymeric esters, ethers, urethanes and epoxy esters and hybrids thereof, for example polyester-urethanes, containing 1-50, more preferably 2-10, malonate groups per molecule. Polymer components A can also be made in known manners, for example by radical polymerisation of ethylenically unsaturated monomers comprising monomers, for example (meth)acrylate, functionalised with a moiety comprising activated C-H acid (donor) groups, preferably an acetoacetate or malonate group, in particular 2-(methacryloyloxy)ethyl acetoacetate or -malonate. In practice polyesters, polyamides and polyurethanes (and hybrids of these) are preferred. It is also preferred that such malonate group containing components have a number average molecular weight (Mn) in the range of from about 100 to about 10000, preferably 500-5000, most preferably 1000-4000; and a Mw less than 20000, preferably less than 10000, most preferably less than 6000 (expressed in GPC polystyrene equivalents).

Suitable crosslinkable components B generally can be ethylenically unsaturated components in which the carbon-carbon double bond is activated by an electron-withdrawing group, e.g. a carbonyl group in the alpha -position. Representative examples of such components are disclosed in US2759913 (column 6, line 35 through column 7, line 45), DE-PS-835809 (column 3, lines 16- 41), US4871822 (column 2, line 14 through column 4, line 14), US4602061 (column 3, line 14 20 through column 4, line 14), US4408018 (column 2, lines 19-68) and US4217396 (column 1, line 60 through column 2, line 64).

Acrylates, methacrylates, itaconates, fumarates and maleates are preferred. Itaconates, fumarates and maleates can be incorporated in the backbone of a polyester or polyester-urethane. Preferred example resins such as polyesters, polycarbonates, polyurethanes, polyamides, acrylics and epoxy resins (or hybrids thereof) polyethers and/or alkyd resins containing activated unsaturated groups may be mentioned. These include, for example, urethane (meth) acrylates obtained by reaction of a polyisocyanate with an hydroxyl group containing (meth)acrylic ester, e.g., an hydroxyalkyl ester of (meth)acrylic acid or a component prepared by esterification of a poly-hydroxyl component with less than a stoichiometric amount of (meth)acrylic acid; polyether (meth)acrylates obtained by esterification of an hydroxyl group-containing polyether with (meth)acrylic acid; poly-functional (meth)acrylates obtained by reaction of an hydroxy-alkyl (meth)acrylate with a poly-carboxylic acid and/or a poly-amino resin; poly(meth)acrylates obtained by reaction of (meth) acrylic acid with an epoxy resin, and poly-alkyl maleates obtained by reaction of a mono-alkyl maleate ester with an epoxy resin and/or an hydroxy functional oligomer or polymer. Also, polyesters end-capped with glycidyl methacrylate are a preferred example. It is possible that the acceptor component contains multiple types of acceptor functional groups.

Most preferred activated unsaturated group-containing components B are the unsaturated acryloyl, methacryloyl and fumarate functional components. Preferably the number average functionality of activated C=C groups per

molecule is 2-20, more preferably 2-10, most preferably 3-6. The equivalent weight (EQW: average molecular weight per reactive functional group) is 100-5000, more preferable 200-2000, and the number average molecular weight preferably is Mn 200-10000, more preferable 300-5000, most preferably 400-3500 g/mole, even more preferably 1000-3000 g/mole.

In view of the use in powder systems the Tg of component B is preferably above 25, 30, 35, more preferably at least 40, 45, most preferably at least 50°C or even at least 60°C, because of the need for powder stability. The Tg is defined as measured with DSC, mid-point, heating rate 10 °C/min. If one of the components has a Tg substantially higher than 50°C, the Tg of the other formulation components can be lower as will be understood by those skilled in the art.

A suitable component B is a urethane (meth)acrylate which has been prepared by reacting a hydroxy- and (meth) acrylate functional compound with isocyanate to form urethane bonds, wherein the isocyanates are preferably at least in part di- or tri-isocyanates, preferably isophorone diisocyanate (IPDI). The urethane bonds introduce stiffness on their own but preferably high Tg isocyanates are used like cyclo-aliphatic or aromatic isocyanates, preferably cycloaliphatic. The amount of such isocyanates used is preferably chosen such that said (meth)acrylate functional polymer Tg is raised above 40, preferably above 45 or 50°C.

The powder coating composition is designed preferably in such a way, that after cure, a crosslink density (using DMTA) can be determined of at least 0.025 mmole/cc, more preferably at least 0.05 mmole/cc, most preferably at least 0.08 mmole/cc. and typically less than 3, 2,1 or 0.7 mmole/cc.

The powder coating composition should retain free flowing powder at ambient conditions and therefore preferably has a Tg above 25°C, preferably above 30°C, more preferably above 35, 40, 50 °C as the midpoint value determined by DSC at a heating rate of 10 °C/min.

As described above the preferred component A is a malonate functional component. However, incorporation of malonate moieties tends to reduce the Tg and it has been a challenge to provide powder coating composition based on malonate as the dominant component A with sufficiently high Tg.

In view of achieving high Tg, the powder coating composition preferably comprises a crosslinkable composition of which crosslinkable donor component A and/or the crosslinkable acceptor component B, which may be in the form of a hybrid component A/B, comprises amide, urea or urethane bonds and/or whereby the crosslinkable composition comprises high Tg monomers, preferably cycloaliphatic or aromatic monomers or in case of polyesters, one or more monomers chosen from the group of 1,4-dimethylol cyclohexane (CHDM), tricyclodecanedimethanol (TCD diol), isosorbide, penta-spiroglycol, hydrogenated bisphenol A and tetra-methyl-cyclobutanediol.

Further, in view of achieving high Tg, the powder coating composition comprises component B or hybrid component A/B being a polyester (meth-)acrylate, a polyester urethane (meth-)acrylate, an epoxy (meth-)acrylate or a urethane (meth-)acrylate, or is a polyester comprising fumarate, maleate or itaconate units, preferably fumarate or is a polyester end-capped with isocyanate or epoxy functional activated unsaturated group.

Most preferably the powder coating composition comprises an RMA crosslinkable composition, which has features adapted for use in an RMA crosslinkable powder coating composition. In particular in view of achieving good flow and levelling properties, and good chemical and mechanical resistances, it was found that preferably in the powder coating composition at least one of crosslinkable components A or B or hybrid A/B is a polymer, preferably chosen from the group of acrylic, polyester, polyester amide, polyester-urethane polymers, which polymer

- has a number average molecular weight Mn, as determined with GPC, of at least 450 gr/mole, preferably at least 1000, more preferably at least 1500 and most preferably at least 2000 gr/mole;
- has a weight average molecular weight Mw, as determined with GPC, of at most 20000 gr/mole, preferably at most 15000, more preferably at most 10000 and most preferably at most 7500 gr/mole;
- preferably has a polydispersity Mw/Mn below 4, more preferably below 3;
- has an equivalent weight EQW in C-H or C=C of at least 150, 250, 350, 450 or 550 gr/mole and preferably at most 2500, 2000, 1500,1250 or 1000 gr/mole and a number average functionality of reactive groups C-H or C=C between 1 - 25, more preferably 1.5 - 15 even more preferably 2 - 15, most preferably 2.5 - 10 C-H groups per molecule;
- preferably has a melt viscosity at a temperature in the range between 100 and 140°C less than 60 Pas, more preferably less than 40, 30, 20, 10 or even 5 Pas;
- preferably comprises amide, urea or urethane bonds and/or comprises high Tg monomers, preferably cycloaliphatic or aromatic monomers, in particular polyester monomers chosen from the group of 1,4-dimethylol cyclohexane (CHDM), tricyclodecanedimethanol (TCD diol), isosorbide, penta-spiroglycol or hydrogenated bisphenol A and tetramethyl-cyclobutanediol; and/or

- has a Tg above 25°C, preferably above 35°C, more preferably above 40, 50 or even 60°C as as the midpoint value determined by DSC at a heating rate of 10 °C/min or is a crystalline polymer with a melting temperature between 40°C and 150, preferably 130°C, preferably at least 50 or even 70 °C and preferably lower than 120°C (as determined by DSC at a heating rate of 10 °C/min).

The polymer features Mn, Mw and Mw/Mn are chosen in view of on one hand the desired powder stability and on the other hand the desired low melt viscosity, but also the envisaged coating properties. A high Mn is preferred to minimize Tg reduction effects of end groups, on the other hand low Mw's are preferred because melt viscosity is very much related to Mw and a low viscosity is desired; therefore low Mw/Mn is preferred.

In view of achieving high Tg the RMA crosslinkable polymer preferably comprises amide, urea or urethane bonds and/or comprising high Tg monomers, preferably cycloaliphatic or aromatic monomers, or in case of polyesters comprises monomers chosen from the group of 1,4-dimethylol cyclohexane (CHDM), TCD diol, isosorbide, penta-spiroglycol or hydrogenated bisphenol A and tetramethyl-cyclobutanediol.

In case the RMA crosslinkable polymer is an A/B hybrid polymer it is further preferred that the polymer also comprises one or more component B groups chosen from the group of acrylate or methacrylate, fumarate, maleate and itaconate, preferably (meth)acrylate or fumarate. Further, if to be used as crystalline material, it is preferred that the RMA crosslinkable polymer has crystallinity with a melting temperature between 40°C and 130°C, preferably at least 50 or even 70 °C and preferably lower than 150, 130 or even 120°C (as determined by DSC at a heating rate of 10 °C/min) It is noted that this is the melting temperature of the (pure) polymer itself and not of the polymer in the composition.

In a preferred embodiment the RMA crosslinkable polymer comprising polyester, polyester amide, polyester-urethane or a urethane-acrylate which comprises urea, urethane or amide bonds derived from cycloaliphatic or aromatic isocyanates, preferably cycloaliphatic isocyanates, said polymer having a Tg of at least 40°C, preferably at least 45 or 50°C and at most 120°C and a number average molecular weight Mn of 450 - 10000, preferably 1000 - 3500 gr/mole and preferably a maximum Mw of 20000, 10000 or 6000 gr/mole and which polymer is provided with RMA crosslinkable components A or B or both. The polymer is obtainable for example by reacting a precursor polymer comprising said RMA crosslinkable groups with an amount of cycloaliphatic or aromatic isocyanates to increase the Tg. The amount of such isocyanates added, or urea/urethane bonds formed, is chosen such the Tg is raised to at least 40°C, preferably at least 45 or 50°C.

Preferably, the RMA crosslinkable polymer is a polyester or polyester-urethane comprising a malonate as the dominant component A and comprising a number average malonate functionality of between 1-25, more preferably 1.5-15 even more preferably 2-15, most preferably 2.5-10 malonate groups per molecule, has a GPC weight average molecular weight between 500 and 20000, preferably 1000-10000, most preferably 2000-6000 gr/mole, which has been prepared by reacting a hydroxy- and malonate functional polymer with isocyanate to form urethane bonds.

Further, the polymer can be an amorphous or (semi-)crystalline polymer or a mixture thereof. Semi-crystalline means being partly crystalline and partly amorphous. (Semi)-crystallinity is to be defined by DSC melting endotherms, targeted crystallinity defined as having a DSC peak melting temperature Tm at least 40°C, preferably at least 50°C, more preferably at least 60°C and preferably at most 130, 120, 110 or 100°C. The DSC Tg of such a component in fully amorphous state preferably is below 40°C, more preferably below 30, 20 or even 10°C.

**(Semi) crystalline retarder and precursor**

In a second aspect, the invention is related to a (semi)crystalline catalyst retarder T or precursor P for use in a catalyst system for crosslinking a crosslinkable composition via a Real Michael Addition (RMA) reaction to obtain the powder coating composition according to any one of the claims 1-18, wherein the catalyst retarder T precursor is prepared by:

(ia) reacting HDI with a compound (i) which is a diol and a compound (ii) comprising a hydroxyl and a carboxylic acid group to obtain a carboxylic acid based (semi) crystalline retarder T;

(ib) neutralizing the carboxylic acid based (semi) crystalline retarder T to obtain a (semi) crystalline precursor P; or

(iia) reacting HDI with an excess of compound (i) which is a diol to obtain a hydroxyl terminated urethane intermediate;

(iib) reacting the hydroxyl urethane intermediate with a cyclic anhydride to obtain a carboxylic acid based (semi) crystalline retarder T;

(iic) neutralizing the carboxylic acid based (semi) crystalline retarder T to obtain a (semi) crystalline precursor P; or

(iiia) reacting HDI with a compound (i) comprising a diol and a compound (iii) having a hydroxyl and a carboxylate ester group to obtain a (semi) crystalline urethane ester;

(iiib) hydrolysing the ester groups of the (semi) crystalline urethane ester with a hydroxide to obtain a(semi) crystalline precursor P;

(iiic) optionally acidifying this(semi) crystalline precursor to obtain a crystalline retarder T;

(iva) reacting HDI with a diol component (i) and a compound (ii) comprising a hydroxyl and a tertiary amine functional group to obtain a tertiary amine based (semi) crystalline precursor P;

(ivb) protonating the tertiary-amine based (semi) crystalline precursor P to obtain a (semi) crystalline retarder T; or

(va) reacting HDI with a diol component (i) and a compound (ii) comprising a hydroxyl and an acrylate functional group to obtain an acrylate functional (semi) crystalline intermediate;

(vb) reacting the acrylate groups of the acrylate functional (semi) crystalline intermediate with a secondary amine to obtain a tertiary amine functional semi-crystalline precursor P;

(vc) protonating the tertiary-amine based (semi) crystalline precursor P to obtain a (semi) crystalline retarder T.

The embodiments and preferred examples as described for the (semi) crystalline precursor and retarder in the first aspect of the invention also apply for the second aspect of the invention.

**Substrate and coating**

The invention also relates to a method for powder-coating a substrate comprising

a. Providing the powder coating composition according to the invention,

b. Applying a layer of the powder to a substrate surface and

c. Heating to a curing temperature Tcur between 75 and 140°C, preferably between 80 and and 130, 120, 110, or even 100°C and preferably using infrared heating,

d. and curing at Tcur for a curing time preferably less than 40, 30, 20,15, 10 or even 5 minutes.

The powder coating composition at the Tcur preferably has a melt viscosity at the curing temperature less than 60Pas, more preferably less than 40, 30, 20, 10 or even 5 Pas. The melt viscosity is to be measured at the very onset of the reaction or without C2 of the catalysis system.

In a preferred embodiment of the method the curing temperature is between 75 and 140°C, preferably between 80 and 120°C and the catalyst system C is a latent catalyst system as described above which allows for powder coating a temperature sensitive substrate, preferably MDF, wood, plastic, composite or temperature sensitive metal substrates like alloys.

Therefore, the invention also relates to articles coated with a powder coating composition of the invention, preferably having a temperature sensitive substrate like MDF, wood, plastic or metal alloys and wherein preferably the crosslinking density XLD of the coating is at least 0.01, preferably at least 0.02, 0.04, 0.07 or even 0.1 mmole/cc (as determined by DMTA) and is preferably lower than 3, 2, 1.5, 1 or even 0.7 mmole/cc.

The powder coating composition, may further comprise additives such as additives selected from the group of pigments, dyes, dispersants, degassing aids, levelling additives, matting additives, flame retarding additives, additives for improving film forming properties, for optical appearance of the coating, for improving mechanical properties, adhesion or for stability properties like colour and UV stability. These additives can be melt-mixed together with one or more of the components of the powder coating composition.

Powder paints can also be designed to produce matte coatings, using similar avenues as in conventional powder coatings systems, either relying on additives or through intentional inhomogeneous crosslinking using either powder blend systems or systems based on blends of polymers of different reactivity.

Standard powder coating processing can be used, typically involving solidifying the extrudate immediately after it leaves the extruder by force-spreading the extrudate onto a cooling band. The extruded paint can take the form of a

solidified sheet as it travels along the cooling band. At the end of the band, the sheet is then broken up into small pieces, preferably via a peg breaker, to a granulate. At this point, there is no significant shape control applied to the granules, although a statistical maximum size is preferred. The paint granulate is then transferred to a classifying microniser, where the paint is milled to very precise particle size distribution. This product is then the finished powder coating paint.

The invention will be illustrated by the following non limiting examples.

## EXAMPLES

### OH value

The OHV was determined by manual titration of the prepared blanks and sample flasks. The indicator solution is made up by dissolving 0.80 g of Thymol Blue and 0.25 g of Cresol Red in 1L of methanol. 10 drops of indicator solution is added to the flask which is then titrated with the standardized 0.5N methanolic potassium hydroxide solution. The end point is reached when the color changes from yellow to grey to blue and gives a blue coloration which is maintained for 10 seconds. The hydroxy value is then calculated according to:

$$\text{Hydroxy Value} = (B - S) \times N \times 56.1/M + AV$$

Where:

B = ml of KOH used for blank titration
S = ml of KOH used for sample titration
N = normality of potassium hydroxide solution
M = sample weight (base resin)
AV= Acid Value of the base resin

The Net Hydroxy Value is defined as: Net OHV = (B - S) x N x 56. 1/M

### Amine value

A freshly prepared solvent blend of 3:1 xylene: ethanol propanol is prepared. A quantity of resin is accurately weighed out into a 250ml conical flask. 50 - 60 ml of 3:1 xylene: ethanol is then added. The solution is heated gently until the resin is entirely dissolved, and ensuring the solution does not boil. The solution is then cooled to room temperature and a potentiometric titration was conducted with 0.1 M hydrochloride acid until after the equivalence point.

### GPC molecular weight

Molar mass distribution of polymers was determined with Gel Permeation Chromatography (GPC) on Perkin-Elmer HPLC series 200 equipment, using refractive index (RI) detector and PLgel column, using as eluens THF, using calibration by polystyrene standards. Experimental molecular weights are expressed as polystyrene equivalents.

### DSC Tg

Resin and paint glass transition temperatures reported herein are the mid-point Tg's determined from Differential Scanning Calorimetry (DSC) using a heating rate of 10 °C/min.

### Impact resistance

The Impact test was carried out in accordance with ASTM D 2794 on the powder coatings panels on both the coating and the reverse side. The highest impact which does not crack the coating is recorded in inch. Pounds (in.lb).

### Solvent resistance

The solvent resistance of the cured film is measured by double rubs using a small cotton ball saturated with methyl ethyl ketone (MEK). It is judged by using a rating system (0-5, best to worst) as described below.

0. no perceptible change. Cannot be scratched with a finger-nail
1. slight loss of gloss

2. Some loss of gloss
3. the coating is very dull and can be scratched with a finger-nail
4. the coating is very dull and quite soft
5. the coating is cracked

## Abbreviations

**Table 1:** description of the abbreviations used in the examples.

| | | |
|---|---|---|
| NPG | neopentyl glycol | |
| IPA | isophthalic acid | |
| TPA | terephthalic acid | |
| DEG | diethylene glycol | |
| IPDI | isophorone diisocyanate | |
| HDI | hexamethylene diisocyanate | |
| DBTL | dibutyltin dilaurate | |
| $TEAHCO_3$ | tetraethylammonium bicarbonate | |
| TEAOH | tetraethylammonium hydroxide | |
| Methyl ethyl ketone | MEK | |
| AV | acid value | |
| OHV | hydroxyl value | |
| Wt% | weight percent | |
| Mn | number average molecular weight | |
| Mw | weight average molecular weight | |
| Tg | glass transition Temperature | |
| EQW | equivalent weight | |
| Araldite® PT912 | glycidyl ester resin (ex Huntsman) | epoxy EQW is 154 g/mol |
| Araldite® GT7004 | bisphenol-A epoxy resin (ex Huntsman) | epoxy EQW is 752 g/mol |
| MODAFLOW® P6000 | powder coating flow modifiers on silica carrier (ex Allnex) | |
| Ken-React® KR46B | titanium (IV) tetrakis octanolato adduct 2 moles (di-tridecyl)hydrogen phosphite (Kenrich petrochemicals, Inc) | |

## Preparation of amorphous materials

## Preparation of malonate donor resin M-1

A 5 liter round bottom reactor equipped with a 4 necked lid, metal anchor stirrer, Pt-100, packed column with top thermometer, condenser, distillate collection vessel, thermocouple and a N2 inlet was charged with 1300g isosorbide (80%), 950 g NPG and 1983 g TPA. The temperature of the reactor was gently raised to about 100 °C, and 4.5 g of Ken-React® KR46B catalyst was added. The reaction temperature was further increased gradually to 230 °C, and the polymerization was progressed under nitrogen with continuous stirring until the reaction mixture is clear and the acid value is below 2 mg KOH/g. During the last part of the reaction, vacuum was applied to push the reaction to completion. The temperature was lowered to 120 °C, and 660 g of diethylmalonate was added. The temperature of the reactor was then increased to 190°C and maintained until no more ethanol was formed. Again, vacuum was applied to push the reaction to completion. After the transesterification was completed, the hydroxyl value of the polyester was measured. The final OHV was 27 mg KOH/g, with a GPC Mn of 1763 and a Mw of 5038, and a Tg (DSC) of 63 °C.

**Preparation of urethane acrylate acceptor resin UA-1**

A urethane-acrylate based on IPDI, hydroxy-propyl-acrylate, glycerol is prepared with the addition of suitable polymerization inhibitors, as described in e.g EP0585742. In a 5 liter reactor equipped with thermometer, stirrer, dosing funnel and gas bubbling inlet, 1020 parts of IPDI, 1.30 parts DBTL and 4.00 parts of hydroquinone are loaded. Then 585 parts of hydroxy propylacrylate are dosed, avoiding that temperature increases to more than 50°C. Once addition is completed, 154 parts of glycerine are added. 15 minutes after the exothermic reaction subsides, the reaction product is cast on a metallic tray. The resulting urethane-acrylate is characterized by a GPC Mn of 744 and Mw of 1467, Tg (DSC) of 51°C, residual isocyanate content < 0.1%, and theoretical unsaturation EQW of 392 g/mol.

**Preparation of carboxylate terminated retarder resin T-1**

A 5 liter round bottom reactor equipped with a 4 necked lid, metal anchor stirrer, Pt-100, packed column with top thermometer, condenser, distillate collection vessel, thermocouple and a N2 inlet was charged with 1180 g NPG and 2000 g IPA. The temperature of the reactor was increased to 230 °C, and the polymerization was progressed under nitrogen with continuous stirring until the reaction mixture is clear. The final product obtained has AV of 48 mg KOH/g and Tg (DSC) of 55 °C.

**Preparation of catalyst precursor P-1**

To prepare the catalyst precursor, a carboxylate terminated polyester resin (AV of 48) was melted and mixed with an aqueous solution of tetraethylammonium bicarbonate $TEAHCO_3$ (41%) using a Leistritz ZSE 18 twin-screw extruder. The extruder comprised a barrel housing nine consecutive heating zones, that were set to maintain the following temperature profile 30-50-80-120-120-120-120-100-100 (in °C.) from inlet to outlet. The solid polyester resin was added through first zone at a rate 2 kg/h, and liquid $TEAHCO_3$ was injected through second zone at 0.60 kg/h. Mixing was taken place between zone 4 to 7 and the screw was set to rotate at 200 rpm. Volatiles and water generated from acid-base neutralization was removed with assistance of vacuum at zone 7. The extruded strand was immediately cooled and collected after leaving the die. The final product obtained has AV of 11 mg KOH/g, amine value of 33 KOH/g and Tg (DSC) of 48 °C.

**Preparation of (semi) crystalline materials**

**Preparation of (semi) crystalline urethane acrylate resin CUA-1**

504.6 g HDI, 1 g DBTL and 5 g butylated hydroxytoluene (BHT) were charged into a 2 liter round bottom reactor and heated to 50 °C under dry air. A mixture of 288.3 g hydroxybutyl acylate and 212.2 g DEG was then added drop-wisely into the reactor to start the reaction, and the process temperature was kept below 120 °C. The (semi) crystalline urethane-acrylate product obtained has a max and an end DSC melting temperature of 106 °C and 113 °C respectively. The theoretical unsaturation EQW= 506 g/mol .

**Preparation of (semi) crystalline acid retarder and corresponding catalyst precursor according to the invention**

**CT-1 & CP-1**

379.3 g DEG and 1 g DBTL was charged into a 2 liter round bottom reactor, and heated to 50 °C. 497.9 HDI was then added drop-wisely into the reactor to start the reaction under nitrogen protection, and the process temperature was kept below 120 °C. After that, 122.8 g succinic anhydride was charged into the reactor. The reaction is proceeded at 120 °C until the desire acid value was achieved. The final product obtained CT-1 has AV of 69 mg KOH/g, Tg (DSC) of -5 °C, a max and an end DSC melting temperature of 115 °C and 125 °C respectively.

To prepare the corresponding catalyst precursor **CP-1,** 1790 g of CR-1 was charged into a rector and melted by heating up to 125 °C. 842.5 g tetraethylammonium hydroxide (TEAOH) aqueous solution (35%) was then slowly added into the reactor, and mixed with the melted crystalline acid resin with continue stirring. Volatiles and water generated from acid-base neutralization was removed with assistance of vacuum. The final product obtained CP-1 has AV of 36 mg KOH/g, amine value of 44 mg KOH/g, Tg (DSC) of -5 °C, a max and an end DSC melting temperature of 110 °C and 120 °C respectively.

**CT-2 & CP-2**

324.3 g DEG and 1 g DBTL was charged into a 2 liter round bottom reactor, and heated to 50 °C. 401.2 hexamethylene diisocyanate (HDI) was then added drop-wisely into the reactor to start the reaction under nitrogen protection, and the process temperature was kept below 120 °C. After that, 136.8 g hydroxypivalic acid was charged into the reactor and the reaction is proceeded at 120 °C until achieving full homogenization. Finally, another potion of 166.3 g of HDI was charged slowly into the reactor over a period of 30 mins. The final product obtained **CT-2** has AV of 64 mg KOH/g, Tg (DSC) of 10 °C, a max and an end DSC melting temperature of 120 °C and 128 °C respectively.

To prepare the corresponding catalyst precursor **CP-2,** 700 g of CR-1 was charged into a rector and melted by heating to 125 °C. 169.7 g tetraethylammonium hydroxide (TEAOH) aqueous solution (35%) was then slowly added into the reactor, and mixed with the melted crystalline acid resin with continue stirring. Volatiles and water generated from acid-base neutralization was removed with assistance of vacuum. The final product obtained CP-2 has AV of 23 mg KOH/g, amine value of 29 mg KOH/g, Tg (DSC) of 10 °C, a max and an end DSC melting temperature of 121 °C and 128 °C respectively.

**CT-3**

41.68 g hydroxypavilic acid and 100.5 g 3-methyl-1,5-pentanediol were charged into a 2 liter round bottom reactor. The mixture was mixed and heated to 60 °C. 172.8 g HDI was then added drop-wisely into the reactor to start the reaction under nitrogen protection. The reaction was proceed at around 110 °C until all isocyanate groups have been reacted. The final product obtained CT-3 has AV of 63 mg KOH/g, Tg (DSC) of 9 °C, a max and an end DSC melting temperature of 88 °C and 99 °C respectively.

**CT-4**

324.3 g DEG, 136.8 g hydroxypivalic acid and 1 g DBTL was charged into a 2 liter round bottom reactor, and heated to 50 °C. 401.2 hexamethylene diisocyanate (HDI) was then added drop-wisely into the reactor to start the reaction under nitrogen protection, and the process temperature was kept below 120 °C until all isocyanate groups have been reacted. The final product obtained **CT-4** has a theoretical AV of 64 mg, a max and an end DSC melting temperature of 116 °C and 122 °C respectively.

**CP-5**

The (semi) crystalline catalyst precursor **CP-5** was prepared by a two-steps route. In the first step, 0.029 g DBTL, 32.3 g of ethyl lactate, and 75.5 g of DEG were charged into a reaction vessel. The reaction mixture was brought to 60°C, when feeding of HDI was initiated. A total amount of 142.2 g of HDI was fed drop wisely, allowing the temperature to slowly increase to 110°C, over the course of one hour. Towards the end of the reaction, when some crystallization became visible, extra heat was applied to raise the temperature to 120°C. The reaction was then proceeded at 120°C for 20 minutes after completing the addition of HDI. Theoretical Mn of this product is expected to be 1800, with a ester EQW of 900 g/mol. DSC analysis indicated a max and an end melting temperature of 133 °C and 140 °C, respectively. In the second step, 127.9 g of the obtained product from first step was charged into a reactor equipped with stirrer, thermometer, dropping funnel and distillation set-up. The crystalline polyurethane was carefully melted, to a temperature of 135°C. 44 g tetraethylammonium hydroxide (TEAOH) aqueous solution (35%) was then slowly added into the reactor, and mixed with the melted crystalline acid resin with continue stirring. Volatiles (water and ethanol) were removed assisted with some N2-stream over the reaction mass. The feeding and distillation step took about 1 hour, during which temperatures were maintained between 125 and 135°C. The final product obtained CP-5 has an amine value of 24 mg KOH/g, a max and an end DSC melting temperature of 109 °C and 123 °C, respectively.

**CP-6**

A reaction vessel was filled with a mixture of 6 mg DBTL, 14.3 g of DEG and 6.87 g of dimethylethanolamine, and heated to 60°C. At this point, a start was made with feeding HDI (total amount 29.1 g). The reaction mass was allowed to slowly rise in temperature over the course of the feeding over 50 minutes up to 105°C. At the end of the feeding process, when crystallization phenomena became visible, extra heat was applied to raise the temperature to 120°C. Heating was continued for another 20 minutes after feeding was complete. The final product obtained CP-6 has a ttheoretical expected Mn of 1300, amine EQW of 650 g/mol, a max and an end DSC melting temperature of 110 °C and 117 °C respectively.

## Powder coating compositions preparations

To prepare the powder coating compositions, the raw materials were first premixed in a high speed Thermoprism Pilot Mixer 3 premixer at 1500 rpm for 20 seconds before being extruded in a Baker Perkins (formerly APV) MP19 25: 1 L D twin screw extruder. The extruder speed was 250 rpm and the four extruder barrel zone temperatures were set at 15, 25, 100 and 100°C for extruding amorphous resins, or 15, 25, 120 and 100°C for extruding (semi) crystalline resins. Following extrusion, the extrudates were grounded using a Retsch GRINDOMIX GM 200 knife mill. The grounded extrudates were sieved to below 100 μm using Russel Finex 100-micron mesh Demi Finex laboratory vibrating sieves.

## Results

PW1(comparative) and PW2 - PW5 (inventive) are examples of powder coatings that were formulated in the stoichiometry to have a reactive acryloyl/C-H2 ratio of 1.5:1, 50 meq of catalyst precursor, 50 meq of acid retarder and 200 meq activator, as listed in Table 2. All paints were sprayed onto aluminum and steel panels with a film thickness between 80-100 μm, and cured for 22 minutes at 120 °C. The analysis and application results of the paints are summarized in Table 3.

**Table 2.** Powder coating composition PW1-PW5.

| Powder coating compositions (values in parts by weight) | **PW1** | **PW2** | **PW3** | **PW4** | **PW5** |
|---|---|---|---|---|---|
| Malonate donor M-1 | 301 | 323 | 344 | 334 | 318 |
| Urethane-acrylate acceptor UA-1 | 178 | 191 | 204 | 198 | 94 |
| Crystalline urethan-acrylate acceptor CUA-1 | | | | | 121 |
| Catalyst precursor P-1 | 59 | | | | |
| *Crystalline catalyst precursor CP-1* | | 44 | 45 | | |
| *Crystalline catalyst precursor CP-2* | | | | 65.5 | 65.5 |
| Retarder resin T-1 | 46 | 27 | | | |
| *Crystalline retarder resin CT-1* | | | 5 | | |
| Araldite® GT 7004 | 116 | 115 | 103 | 103 | 103 |
| Titanium dioxide Kronos 2160 | 290 | 290 | 290 | 290 | 290 |
| Modaflow P6000 | 10 | 10 | 10 | 10 | 10 |
| Total | 1000 | 1000 | 1000 | 1000 | 1000 |

PW1 is a comparative reference paint prepared with only amorphous components. The paint has a Tg of 56 °C and can be well cured after 22 mins at 120 °C, as evidenced by good solvent resistance. However, it has no adhesion and impact resistance at all on both aluminum and steel substrates.

PW2 was prepared by replacing the amorphous catalyst precursor P-1 with a (semi) crystalline one CP-1. The impact of (semi) crystalline material on the paint Tg is neglectable, and a reduction of paint Tg for 1 °C was determined by DSC analysis. This is a strong evidence that most (semi) crystalline catalyst precursors have recrystallized in the paint after extrusion. A DSC scan (Figure 1) of PW2 paint shows a melting peak at the same melting range as CP-1 (delta H due to melting = 0.24 J/g). This also suggests that most (semi) crystalline catalyst precursors are in the form of crystals within the amorphous matrix of the paint. Curing speed is comparable to the amorphous catalyst, as good solvent resistance can be achieved. (semi) Crystalline precursor CP-1 significantly improved the adhesion of coating on metal substrates and obtained perfect adhesion. In addition, mechanical property of the film has slightly improved in terms of impact resistance. This is probably because CP-1 has plasticize the cured film, as

| **Paint No.** | **Impact Resistance (in.lb)** | **Adhesion** | **Solvent Resistance** | **DSC Paint Tg (°C)** | **DSC cured film Tg (°C)** | **Delta H due to melting (J/g)** |
|---|---|---|---|---|---|---|
| PW1 | 0 | GT5 | 1 | 56 | 92 | n/a |
| PW2 | 10 | GT0 | 0-1 | 55 | 90 | 0.24 |

(continued)

| Paint No. | Impact Resistance (in.lb) | Adhesion | Solvent Resistance | DSC Paint Tg (°C) | DSC cured film Tg (°C) | Delta H due to melting (J/g) |
|---|---|---|---|---|---|---|
| PW3 | 10 | GT0 | 0-1 | 52 | 87 | 0.31 |
| PW4 | 10 | GT0 | 0-1 | 50 | 91 | 0.46 |
| PW5 | 20 | GT0 | 0-1 | 50 | 78 | 2.65 |

evidence of reduction in cured film Tg for 2 °C.

PW3 was formulated with both (semi) crystalline acid retarder CT-1 and precursor CP-1. The paint still has relatively high Tg, as most (semi) crystalline components believed to have been recrystallized in the paint after extrusion. This is evidenced by increasing in delta H to 0.31 J/g. The application results indicates good solvent resistance. Compare to PW1, adhesion and impact resistance have also been improved.

**Table 3.** Summary of application and DSC analysis results of powder paints PW1-PW5.

PW4 was prepared with an alternative (semi) crystalline catalyst precursor CP-2. CP-2 has the same backbone as CP-1, but the terminated carboxylates was prepared by reacting hydroxyl acids with isocyanate groups. The paint has slightly lower Tg due to higher amount of (semi) crystalline in the formulation. It is still believed most CP-2 has been recrystallized in the paint after extrusion, and delta H increased to 0.46 J/g. Compare to full amorphous formulation PW1, application results also showed advantage over adhesion and impact resistance.

PW5 was prepared with a (semi) crystalline urethane acrylate acceptor CUA-1 and CP-2. Compare to PW4, the paint Tg has not been reduced with further addition of (semi) crystalline acceptor. It is believed that CUA-1 and CP-2 can recrystallize together in the paint, since they have similar backbone structure. A DSC scan of PW5 (Figure 2) has clearly demonstrated the presence of crystals in amorphous matrix of paint, and the melting peaks are in good agreement with the melting range of CUA-1 and CP-2.

## Claims

**1.** A powder coating composition comprising a crosslinkable composition and a catalyst system, wherein the crosslinkable composition is formed by a crosslinkable donor component A and a crosslinkable acceptor component B that are crosslinkable by a Real Michael Addition (RMA) reaction via the catalyst system, and which catalyst system is able to catalyze the RMA crosslinking reaction at a curing temperature below 140°C, preferably below 120°C or even more preferably below 110°C or below 100°C and preferably at least 70°C, preferably at least 80, 90 or 100°C,

wherein the crosslinkable composition comprises

a) the crosslinkable donor component A having at least 2 acidic C-H donor groups in activated methylene or methine, and
b) the crosslinkable acceptor component B having at least 2 activated unsaturated acceptor groups C=C, which react with component A by Real Michael Addition (RMA) to form a crosslinked network,

and
wherein the catalyst system comprises a (semi) crystalline precursor P, an activator C and optionally a retarder T; wherein the (semi) crystalline precursor P is a weak base with a pKa of its protonated form of more than 2, preferably more than 3, more preferably more than 4 and even more preferably at least 5 units lower than that of the activated C-H groups in donor component A; and the activator C can react with P at curing temperature, producing a strong base (CP) that can catalyze the Michael Addition reaction between A and B;
wherein the retarder T is preferably a (semi) crystalline retarder, wherein the retarder T is an acid that has a pKa of more than 2, more preferably more than 3, even more preferably more than 4 or 5 points lower than that of the activated C-H in A, and which upon deprotonation produces a weak base that can react with the activator C, producing a strong base that can catalyse the Michael Addition reaction between the crosslinkable compositions A and B.

**2.** The powder coating composition according to claim 1, wherein the (semi) crystalline precursor and/or (semi) crystalline retarder is partially in a crystalline state and has a melting temperature below 140, 130°C, preferably below 120°C, 110° or even below 100°C and which precursor and/or retarder comprises a urethane backbone.

3. The powder coating composition according to any one of the claims 1 or 2, wherein the (semi) crystalline precursor P and/or (semi) crystalline retarder T has a urethane backbone prepared by reacting a hexamethylene diisocyanate (HDI) with at least a compound (i) comprising at least two, preferably two, isocyanate reactive groups, preferably hydroxyl, and is more preferably a diol.

4. The powder coating composition according to any one of the preceding claims, wherein the (semi) crystalline retarder T and/or precursor P comprise a urethane backbone and is prepared by

(ia) reacting HDI with a compound (i) which is a diol and a compound (ii) comprising a hydroxyl and a carboxylic acid functional group to obtain a carboxylic acid based (semi) crystalline retarder T;
(ib) neutralizing the carboxylic acid based (semi) crystalline retarder T to obtain a (semi) crystalline precursor P; or
(iia) reacting HDI with a stoichiometric excess of compound (i) which is a diol to obtain a hydroxyl terminated urethane intermediate;
(iib) reacting the hydroxyl urethane intermediate with a cyclic anhydride to obtain a carboxylic acid based (semi) crystalline retarder T;
(iic) neutralizing the carboxylic acid based (semi) crystalline retarder T to obtain a (semi) crystalline precursor P; or
(iiia) reacting HDI with a compound (i) which is a diol and a compound (iii) having a hydroxyl and carboxylate ester functional group to obtain a (semi) crystalline urethane ester;
(iiib) hydrolysing the ester groups of the (semi) crystalline urethane ester with a hydroxide to obtain a (semi) crystalline precursor P;
(iiic) optionally acidifying the (semi) crystalline precursor of (iiib) to obtain a crystalline retarder T;
(iva) reacting HDI with compound (i) which is a diol and a compound (iv) comprising a hydroxyl and a tertiary amine functional group to obtain a tertiary amine based (semi) crystalline precursor P;
(ivb) protonating the tertiary-amine based (semi) crystalline precursor P to obtain a (semi) crystalline retarder T; or
(va) reacting HDI with compound (i) which is a diol and a compound (v) comprising a hydroxyl and an acrylate functional group to obtain an acrylate functional (semi) crystalline intermediate;
(vb) reacting the acrylate groups of the acrylate functional (semi) crystalline intermediate with a secondary amine to obtain a tertiary amine functional semi-crystalline precursor P;
(vc) protonating the tertiary-amine based (semi) crystalline precursor P to obtain a (semi) crystalline retarder T.

5. The powder coating composition according to any one of the preceding claims, wherein the (semi) crystalline precursor P is prepared according to claim 4 wherein the hydrolysis and/ or neutralization is done with

• a hydroxide salt of a cation that is not acidic, preferably a cation according to formula Y(R')4, wherein Y represents N or P, and wherein each R' can be as same or different alkyl, aryl or aralkyl possible linked to a polymer, preferably a quaternary ammonium or phosphonium cation, preferably a tetra-butyl ammonium cation or a tetra-ethyl ammonium cation; or
• a very strong basic amine, preferably selected from the group of amidines; preferably 1,8-diazabicyclo (5.4.0) undec-7-ene (DBU), or guanidines; preferably 1,1,3,3 - tetramethylguanidine (TMG), optionally in the presence of some water.

6. The powder coating composition according to any one of the preceding claims wherein the diol (i) has :

a connecting chain between the hydroxyl groups that contain ether- or thioether groups, preferably - CH2-O-CH2-, -CH2-S-CH2-, -CH2-S-S-CH2- and the connection chain has a maximum length of 11 carbon atoms and/or heteroatoms between the hydroxyl groups; or
a connecting chain between the hydroxyl groups containing a -CH(CH3)- unit or a -CH(CH2CH3)-preferably in a central position, whereby the connecting chain has a chain length that has an uneven number of carbon atoms and/or heteroatoms of less than 6 between the hydroxyl groups;
wherein the hydroxyl groups are primary hydroxyl groups and wherein the diols are not aromatic and not cycloaliphatic.

7. The powder coating composition according to any one of claims 3 to 6, wherein compound (i) comprising at least two isocyanate reactive groups is a diol selected from the group consisting of diethylene glycol; triethylene glycol; 3-methyl 1,5-pentanediol, 2-methyl 1,3-propane diol; 2,2'-thio diethanol; 2,2'-dithio diethanol; tetraethylene glycol; di1,3-propanediol); di(1.4-butanediol).

**8.** The powder coating composition according to any one of claims 3 to 7, wherein the ratio of the isocyanate reactive groups of compound (i) and where present compound (ii), (iii), (iv) or (v) relative to the isocyanate groups is preferably above one, more preferably the molar ratio of the isocyanate reactive groups over isocyanate groups is between 1.0 to 1.5, more preferably from 1.01 to 1.2.

**9.** The powder coating composition according to any one of the preceding claims, wherein the number average molecular weight of the (semi) crystalline retarder is between 300 and 4000, preferably between 500 and 3000, more preferably between 1000 and 2000 g/mol.

**10.** The powder coating composition according to any one of the preceding claims, wherein the catalyst system is a separated catalyst system wherein the (semi) crystalline precursor P and activator C are macrophysically separated.

**11.** The powder coating composition according to any one of the preceding claims, wherein

- the activator C is selected from the group consisting of epoxide, carbodiimide, oxetane, oxazoline or aziridine functional components, preferably an epoxide or carbodiimide; and
- the (semi) crystalline precursor P is is a carboxylate or a tertiary amine; and
- the retarder T is preferably a protonated precursor P.

**12.** The powder coating composition according to anyone of the preceding claims, comprising

- an activator C in an amount between 1 and 600 μeq/gr, preferably between 10 and 400, more preferably between 20 and 200 μeq/gr relative to total weight of binder components A and B and catalyst system,
- a (semi) crystalline precursor P in an amount between 1 and 300 μeq/gr, preferably between 10 and 200, more preferably between 20 and 100 μeq/gr relative to total weight of binder components A and B and catalyst system,
- optionally a retarder T in an amount between 1 and 500, preferably between 10 and 400, more preferably between 20 and 300 μeq/gr and most preferably between 30 and 200 μeq/gr, relative to total weight of binder components A and B and catalyst system
- preferably wherein the equivalent amount of C

  (i) is higher than the amount of T, when present, preferably by an amount between 1 and 300 μeq/gr, preferably between 10 and 200, more preferably between 20 and 100 μeq/gr and
  (ii) is preferably higher than the amount of P and
  (iii) more preferably higher than the sum of the amount of P and T .

**13.** The powder coating composition according to anyone of the preceding claims,

a. wherein the (semi) crystalline precursor P respectively represents between 10 and 100 equivalent % of the sum of P and T ,
b. preferably the amount of retarder T is 20 - 400 eq%, preferably 30 - 300 eq% of the amount of P,
c. wherein preferably the ratio of the equivalent amount of C to the sum of the amount of P and T is at least 0.5, preferably at least 0.8, more preferably at least 1 and preferably at most 3, more preferably at most 2,
d. the ratio of C to T is preferably at least 1, preferably at least 1.5, most preferably at least 2.

**14.** The powder coating composition according to any one of the preceding claims, wherein the crosslinkable donor component A and/or the acceptor component B are (semi) crystalline compounds, preferably having a urethane backbone, which urethane backbone is preferably prepared by reacting a hexamethylene diisocyanate with a compound comprising at least two isocyanate reactive groups, preferably an alcohol, and is more preferably a diol.

**15.** The powder coating composition according to claim 14, wherein the urethane backbone of the (semi) crystalline donor component A and/or the (semi) crystalline acceptor B and the (semi) crystalline precursor (P) have a urethane backbone prepared by reacting HDI with at least a compound (i) having at least two isocyanate reactive groups, which is the same for the (semi) crystalline precursor (P) and the (semi) crystalline donor component A and/or the (semi) crystalline acceptor B,
which compound (i) is preferably a diol which diol has:

a connecting chain between the hydroxyl groups that contain ether- or thioether groups, preferably - CH2-O-CH2-, -CH2-S-CH2-, -CH2-S-S-CH2- and the connection chain has a maximum length of 11 carbon atoms and/or

heteroatoms between the hydroxyl groups; or
a connecting chain between the hydroxyl groups containing a -CH(CH3)- unit or a -CH(CH2CH3)-preferably in a central position, whereby the connecting chain has a chain length that has an uneven number of carbon atoms and/or heteroatoms of less than 6 between the hydroxyl groups;
wherein the hydroxyl groups are primary hydroxyl groups and wherein the diols are not aromatic and not cycloaliphatic.

**16.** The powder coating composition according to anyone of the preceding claims wherein

a. crosslinkable component A comprises at least 2 acidic C-H donor groups in activated methylene or methine in a structure Z1(-C(-H)(-R)-)Z2 wherein R is hydrogen, a hydrocarbon, an oligomer or a polymer, and wherein Z1 and Z2 are the same or different electron-withdrawing groups, preferably chosen from keto, ester or cyano or aryl groups, and preferably comprises an activated C-H derivative having a structure according to formula 1:

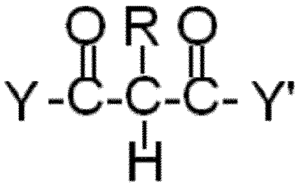

Formula 1

wherein R is hydrogen or an optionally substituted alkyl or aryl and Y and Y' are identical or different substituent groups, preferably alkyl, aralkyl or aryl , or alkoxy or wherein in formula 1 the -C(=O)-Y and/or -C(=O)-Y' is replaced by CN or aryl, no more than one aryl or wherein Y or Y' can be NRR' (R and R' are H or optionally substituted alkyl) but preferably not both, wherein R, Y or Y' optionally provide connection to an oligomer or polymer, said component A preferably being a malonate, acetoacetate, malonamide, acetoacetamide or cyanoacetate groups, preferably providing at least 50, preferably 60, 70 or even 80 % of the total of C-H acidic groups in crosslinkable component A,
b. Component B comprises the at least 2 activated unsaturated RMA acceptor groups preferably originate from acryloyl, methacryloyl, itaconates, maleate or fumarate functional groups,

wherein preferably at least one, more preferably both, of components A or B is a polymer and
wherein preferably the composition comprises a total amount donor groups C-H and acceptor groups C=C per gram binder solids from 0.05 to 6 meq/gr binder solids and preferably the ratio of acceptor groups C=C to donor groups C-H is more than 0.1 and less than 10.

**17.** The powder coating composition according to anyone of the preceding claims, wherein at least one of crosslinkable components A or B or hybrid A/B is a polymer, preferably chosen from the group of acrylic, polyester, polyester amide, polyester-urethane polymers, which polymer

• has a number average molecular weight Mn, as determined with GPC, of at least 450 gr/mole, preferably at least 1000, more preferably at least 1500 and most preferably at least 2000 gr/mole;
• has a weight average molecular weight Mw, as determined with GPC, of at most 20000 gr/mole, preferably at most 15000, more preferably at most 10000 and most preferably at most 7500 gr/mole;
• preferably has a polydispersity Mw/Mn below 4, more preferably below 3;
• has an equivalent weight EQW in C-H or C=C of at least 150, 250, 350, 450 or 550 gr/mole and preferably at most 2500, 2000, 1500,1250 or 1000 gr/mole and a number average functionality of reactive groups C-H or C=C between 1 - 25, more preferably 1.5 - 15 even more preferably 2 - 15, most preferably 2.5 - 10 C-H groups per molecule;
• preferably has a melt viscosity at a temperature in the range between 100 and 140°C less than 60 Pas, more preferably less than 40, 30, 20, 10 or even 5 Pas;
• preferably comprises amide, urea or urethane bonds and/or comprises high Tg monomers, preferably cycloaliphatic or aromatic monomers, in particular polyester monomers chosen from the group of 1,4-dimethylol cyclohexane (CHDM), tricyclodecanedimethanol (TCD diol), isosorbide, penta-spiroglycol or hydrogenated bisphenol A and tetramethyl-cyclobutanediol; and/or

• has a Tg above 25°C, preferably above 35°C, more preferably above 40, 50 or even 60°C as as the midpoint value determined by DSC at a heating rate of 10 °C/min or is a (semi) crystalline polymer with a melting temperature between 40°C and 150, preferably 130°C, preferably at least 50 or even 70 °C and preferably lower than 120°C (as determined by DSC at a heating rate of 10 °C/min).

**18.** The powder coating composition according to anyone of the preceding claims, wherein the acceptor component B is a polyester (meth-)acrylate, a polyester urethane (meth-)acrylate, an epoxy (meth-) acrylate or a urethane (meth-) acrylate, or is a polyester comprising fumarate, maleate or itaconate units, preferably fumarate or is a polyester end-capped with isocyanate or epoxy functional activated unsaturated group.

**19.** A (semi)crystalline catalyst retarder T or precursor P suitable for use in a catalyst system for crosslinking a crosslinkable composition via a Real Michael Addition (RMA) reaction to obtain a powder coating composition according to any one of the claims 1-18, wherein the catalyst retarder T and/ or precursor P is prepared by:

(ia) reacting HDI with a compound (i) which is a diol and a compound (ii) comprising a hydroxyl carboxylic acid groups to obtain a carboxylic acid based (semi) crystalline retarder T;
(ib) neutralizing the carboxylic acid based (semi) crystalline retarder T to obtain a (semi) crystalline precursor P; or
(iia) reacting HDI with a compound (i) which is a diol to obtain a hydroxyl terminated urethane intermediate;
(iib) reacting the hydroxyl urethane intermediate with a cyclic anhydride to obtain a carboxylic acid based (semi) crystalline retarder T;
(iic) neutralizing the carboxylic acid based (semi) crystalline retarder T to obtain a (semi) crystalline precursor P; or
(iiia) reacting HDI with a compound (i) which is a diol and a compound (iii) having a hydroxyl carboxylate ester groups to obtain a (semi) crystalline urethane ester;
(iiib) hydrolysing the ester groups of the (semi) crystalline urethane ester with a hydroxide to obtain a (semi) crystalline precursor P;
(iiic) optionally acidifying the (semi) crystalline precursor of (iiib) to obtain a crystalline retarder T
(iva) reacting HDI with a diol component (i) and a compound (iv) comprising a hydroxyl and a tertiary amine functional group to obtain a tertiary amine based (semi) crystalline precursor P;
(ivb) protonating the tertiary-amine based (semi) crystalline precursor P to obtain a (semi) crystalline retarder T; or
(va) reacting HDI with a diol component (i) and a compound (v) comprising a hydroxyl and an acrylate functional group to obtain an acrylate functional (semi) crystalline intermediate;
(vb) reacting the acrylate groups of the acrylate functional (semi) crystalline intermediate with a secondary amine to obtain a tertiary amine functional semi-crystalline precursor P;
(vc) protonating the tertiary-amine based (semi) crystalline precursor P to obtain a (semi) crystalline retarder T.

**20.** A (semi)crystalline catalyst retarder T or precursor P according to claim 19, wherein the (semi) crystalline precursor and/or (semi) crystalline retarder have a melting temperature of the compound itself that is below 145°C, 130 °C, preferably below 120°C, 110° or even below 100°C such as between 80 and 130°C, preferably between 80 and 120 °C.

**21.** A (semi)crystalline catalyst retarder T or (semi)crystalline precursor P according to claim 19 or 20, having the features as specified in any one of the claims 1 to 18.

**22.** A method for powder-coating a substrate comprising

a. applying a layer comprising the powder coating composition according to anyone of claims 1-18, to a substrate surface wherein the substrate preferably is a temperature sensitive substrate, preferably MDF, wood, plastic, composite or temperature sensitive metal substrates like alloys and
b. heating to a curing temperature Tcur between 75 and 140°C, and more preferably between 80 and 130, 120, 110, or even 100°C, preferably using infrared heating, wherein the melt viscosity at the curing temperature Tcur is preferably less than 60 Pas, more preferably less than 40, 30, 20, 10 or even 5 Pas;
c. and curing at Tcur for a curing time preferably less than 40, 30, 20,15, 10 or even 5 minutes.

**23.** Articles coated with a powder having a the powder coating composition according to claim 1 - 18, wherein the articles preferably have a temperature sensitive substrate preferably selected from the group of MDF, wood, plastic, composite or metal alloys and wherein preferably the crosslinking density XLD is at least 0.01, preferably at least 0.02, 0.04, 0.07 or even 0.1 mmole/ml (as determined by DMTA) and is preferably lower than 3, 2, 1.5, 1 or even 0.7

mmole/ml.

**Patentansprüche**

1. Pulverbeschichtungszusammensetzung, umfassend eine vernetzbare Zusammensetzung und ein Katalysatorsystem, wobei die vernetzbare Zusammensetzung von einer vernetzbaren Donorkomponente A und einer vernetzbaren Akzeptorkomponente B gebildet wird, die durch eine echte Michael-Additions-(RMA)-Reaktion über das Katalysatorsystem vernetzbar sind, und wobei das Katalysatorsystem die RMA-Vernetzungsreaktion bei einer Härtungstemperatur unter 140 °C, vorzugsweise unter 120 °C oder noch stärker bevorzugt unter 110 °C oder unter 100 °C und vorzugsweise mindestens 70 °C, vorzugsweise mindestens 80, 90 oder 100 °C, katalysieren kann,

    wobei die vernetzbare Zusammensetzung

    a) die vernetzbare Donorkomponente A mit mindestens 2 sauren C-H-Donorgruppen in aktiviertem Methylen oder Methin und
    b) die vernetzbare Akzeptorkomponente B mit mindestens 2 aktivierten ungesättigten Akzeptorgruppen C=C, die mit Komponente A unter Bildung eines vernetzten Netzwerkes durch echte Michael-Addition (RMA) reagieren,

    umfasst
    und
    wobei das Katalysatorsystem einen (halb)kristallinen Vorläufer P, einen Aktivator C und gegebenenfalls einen Hemmstoff T umfasst;
    wobei der (halb)kristalline Vorläufer P eine schwache Base mit einem pKa ihrer protonierten Form von mehr als 2, vorzugsweise mehr als 3, stärker bevorzugt mehr als 4 und noch stärker bevorzugt mindestens 5 Einheiten weniger als der der aktivierten C-H-Gruppen in Donorkomponente A ist und der Aktivator C mit P bei Härtungstemperatur reagieren kann, wodurch eine starke Base (CP) erzeugt wird, die die Michael-Additionsreaktion zwischen A und B katalysieren kann;
    wobei der Hemmstoff T vorzugsweise ein (halb)kristalliner Hemmstoff ist, wobei der Hemmstoff T eine Säure ist, die einen pKa von mehr als 2, stärker bevorzugt mehr als 3, noch stärker bevorzugt mehr als 4 oder 5 Punkten weniger als der der aktivierten C-H in A hat und die bei Deprotonierung eine schwache Base erzeugt, die mit dem Aktivator C reagieren kann, wodurch eine starke Base erzeugt wird, die die Michael-Additionsreaktion zwischen den vernetzbaren Zusammensetzungen A und B katalysieren kann.

2. Pulverbeschichtungszusammensetzung nach Anspruch 1, wobei der (halb)kristalline Vorläufer und/oder (halb) kristalline Hemmstoff teilweise in einem kristallinen Zustand vorliegen und eine Schmelztemperatur unter 140 °C, 130 °C, vorzugsweise unter 120 °C, 110° oder sogar unter 100 °C aufweisen und wobei der Vorläufer und/oder Hemmstoff eine Urethan-Hauptkette umfassen.

3. Pulverbeschichtungszusammensetzung nach einem der Ansprüche 1 oder 2, wobei der (halb)kristalline Vorläufer P und/oder (halb)kristalline Hemmstoff T eine Urethan-Hauptkette aufweisen, die durch Umsetzen eines Hexamethylendiisocyanats (HDI) mit mindestens einer Verbindung (i), die mindestens zwei, vorzugsweise zwei, Isocyanat-reaktive Gruppen, vorzugsweise Hydroxyl, umfasst, und stärker bevorzugt ein Diol ist, hergestellt wird.

4. Pulverbeschichtungszusammensetzung nach einem der vorstehenden Ansprüche, wobei der (halb)kristalline Hemmstoff T und/oder Vorläufer P eine Urethan-Hauptkette umfassen und durch

    (ia) Umsetzen von HDI mit einer Verbindung (i), die ein Diol ist, und einer Verbindung (ii), die eine Hydroxyl- und eine Carbonsäure-funktionelle Gruppe umfasst, unter Erhalt eines Carbonsäure-basierten (halb)kristallinen Hemmstoffes T;
    (ib) Neutralisieren des Carbonsäure-basierten (halb)kristallinen Hemmstoffes T unter Erhalt eines (halb)kristallinen Vorläufers P; oder
    (iia) Umsetzen von HDI mit einem stöchiometrischen Überschuss von Verbindung (i), die ein Diol ist, unter Erhalt eines Hydroxyl-terminierten Urethan-Zwischenproduktes;
    (iib) Umsetzen des Hydroxylurethan-Zwischenproduktes mit einem cyclischen Anhydrid unter Erhalt eines Carbonsäure-basierten (halb)kristallinen Hemmstoffes T;
    (iic) Neutralisieren des Carbonsäure-basierten (halb)kristallinen Hemmstoffes T unter Erhalt eines (halb)kristallinen Vorläufers P; oder
(iiia) Umsetzen von HDI mit einer Verbindung (i), die ein Diol ist, und einer Verbindung (iii) mit einer Hydroxyl- und Carboxylatester-funktionellen Gruppe unter Erhalt eines (halb)kristallinen Urethanesters;
(iiib) Hydrolysieren der Estergruppen des (halb)kristallinen Urethanesters mit einem Hydroxid unter Erhalt eines (halb)kristallinen Vorläufers P;
(iiic) gegebenenfalls Ansäuern des (halb)kristallinen Vorläufers von (iiib) unter Erhalt eines kristallinen Hemmstoffes T;
(iva) Umsetzen von HDI mit Verbindung (i), die ein Diol ist, und einer Verbindung (iv), die eine Hydroxyl- und eine tertiäres Amin-funktionelle Gruppe umfasst, unter Erhalt eines tertiäres Amin-basierten (halb)kristallinen Vorläufers P;
(ivb) Protonieren des tertiäres-Amin-basierten (halb)kristallinen Vorläufers P unter Erhalt eines (halb)kristallinen Hemmstoffes T; oder
(va) Umsetzen von HDI mit Verbindung (i), die ein Diol ist, und einer Verbindung (v), die eine Hydroxyl- und eine Acrylat-funktionelle Gruppe umfasst, unter Erhalt eines Acrylat-funktionellen (halb)kristallinen Zwischenproduktes;
(vb) Umsetzen der Acrylatgruppen des Acrylat-funktionellen (halb)kristallinen Zwischenproduktes mit einem sekundären Amin unter Erhalt eines tertiäres Aminfunktionellen halbkristallinen Vorläufers P;
(vc) Protonieren des tertiäres-Amin-basierten (halb)kristallinen Vorläufers P unter Erhalt eines (halb)kristallinen Hemmstoffes T
hergestellt werden.

**5.** Pulverbeschichtungszusammensetzung nach einem der vorstehenden Ansprüche, wobei der (halb)kristalline Vorläufer P gemäß Anspruch 4 hergestellt wird, wobei die Hydrolyse und/oder Neutralisation mit

- einem Hydroxidsalz von einem Kation, das nicht sauer ist, vorzugsweise einem Kation gemäß Formel $Y(R')_4$, wobei Y N oder P darstellt und wobei jeder R' gleich oder verschieden Alkyl, Aryl oder Aralkyl, das möglicherweise mit einem Polymer verknüpft ist, sein kann, vorzugsweise einem Quartärammonium- oder -phosphoniumkation, vorzugsweise einem Tetrabutylammoniumkation oder einem Tetraethylammoniumkation; oder
- einem sehr starken basischen Amin, vorzugsweise ausgewählt aus der Gruppe von Amidinen; vorzugsweise 1,8-Diazabicyclo(5.4.0)undec-7-en (DBU), oder Guanidinen; vorzugsweise 1,1,3,3-Tetramethylguanidin (TMG), gegebenenfalls in der Gegenwart von etwas Wasser

erfolgt.

**6.** Pulverbeschichtungszusammensetzung nach einem der vorstehenden Ansprüche wobei das Diol (i):

eine Verbindungskette zwischen den Hydroxylgruppen, die Ether- oder Thioethergruppen, vorzugsweise -CH2-O-CH2-, -CH2-S-CH2-, -CH2-S-S-CH2-, enthält, wobei die Verbindungskette eine maximale Länge von 11 Kohlenstoffatomen und/oder Heteroatomen zwischen den Hydroxylgruppen hat; oder
eine Verbindungskette zwischen den Hydroxylgruppen, die eine -CH(CH3)-Einheit oder ein -CH(CH2CH3)- vorzugsweise in einer zentralen Position enthält, wobei die Verbindungskette eine Kettenlänge hat, die eine ungerade Anzahl von Kohlenstoffatomen und/oder Heteroatomen von kleiner als 6 zwischen den Hydroxylgruppen aufweist,
aufweist;
wobei die Hydroxylgruppen primäre Hydroxylgruppen sind und wobei die Diole nicht aromatisch und nicht cycloaliphatisch sind.

**7.** Pulverbeschichtungszusammensetzung nach einem der Ansprüche 3 bis 6, wobei Verbindung (i), die mindestens zwei Isocyanat-reaktive Gruppen umfasst, ein Diol ist, das aus der Gruppe ausgewählt ist, die aus Diethylenglycol; Triethylenglycol; 3-Methyl-1,5-pentandiol, 2-Methyl-1,3-propandiol; 2,2'-Thiodiethanol; 2,2'-Dithiodiethanol; Tetraethylenglycol; Di(1,3-propandiol); Di(1,4-butandiol) besteht.

**8.** Pulverbeschichtungszusammensetzung nach einem der Ansprüche 3 bis 7, wobei das Verhältnis der Isocyanatreaktiven Gruppen von Verbindung (i) und, wenn vorhanden, Verbindung (ii), (iii), (iv) oder (v) in Bezug auf die Isocyanatgruppen vorzugsweise über eins liegt, stärker bevorzugt das Molverhältnis der Isocyanat-reaktiven Gruppen gegenüber Isocyanatgruppen zwischen 1,0 und 1,5, stärker bevorzugt 1,01 und 1,2 liegt.

**9.** Pulverbeschichtungszusammensetzung nach einem der vorstehenden Ansprüche, wobei das zahlenmittlere Molekulargewicht des (halb)kristallinen Hemmstoffes zwischen 300 und 4.000, vorzugsweise zwischen 500 und 3.000, stärker bevorzugt zwischen 1.000 und 2.000 g/mol liegt.

**10.** Pulverbeschichtungszusammensetzung nach einem der vorstehenden Ansprüche, wobei das Katalysatorsystem ein getrenntes Katalysatorsystem ist, wobei der (halb)kristalline Vorläufer P und der Aktivator C makrophysikalisch getrennt sind.

**11.** Pulverbeschichtungszusammensetzung nach einem der vorstehenden Ansprüche, wobei

- der Aktivator C aus der Gruppe ausgewählt ist, die aus Epoxid-, Carbodiimid-, Oxetan-, Oxazolin- oder Aziridin-funktionellen Komponenten, vorzugsweise einem Epoxid oder Carbodiimid besteht; und
- der (halb)kristalline Vorläufer P ein Carboxylat oder ein tertiäres Amin ist und
- der Hemmstoff T vorzugsweise ein protonierter Vorläufer P ist.

**12.** Pulverbeschichtungszusammensetzung nach einem der vorstehenden Ansprüche, umfassend

• einen Aktivator C in einer Menge zwischen 1 und 600 μÄqu./g, vorzugsweise zwischen 10 und 400, stärker bevorzugt zwischen 20 und 200 μÄqu./g, bezogen auf das Gesamtgewicht der Bindemittelkomponenten A und B und des Katalysatorsystems,
• einen (halb)kristallinen Vorläufer P in einer Menge zwischen 1 und 300 μÄqu./g, vorzugsweise zwischen 10 und 200, stärker bevorzugt zwischen 20 und 100 μÄqu./g, bezogen auf das Gesamtgewicht der Bindemittelkomponenten A und B und des Katalysatorsystems,
• gegebenenfalls einen Hemmstoff T in einer Menge zwischen 1 und 500, vorzugsweise zwischen 10 und 400, stärker bevorzugt zwischen 20 und 300 μÄqu./g und am stärksten bevorzugt zwischen 30 und 200 μÄqu./g, bezogen auf das Gesamtgewicht der Bindemittelkomponenten A und B und des Katalysatorsystems,
• wobei vorzugsweise die Äquivalentmenge von C

(i) höher ist als die Menge von T, sofern vorhanden, vorzugsweise um eine Menge zwischen 1 und 300 μÄqu./g, vorzugsweise zwischen 10 und 200, stärker bevorzugt zwischen 20 und 100 μÄqu./g, und
(ii) vorzugsweise höher ist als die Menge von P und
(iii) stärker bevorzugt höher ist als die Summe der Menge von P und T.

**13.** Pulverbeschichtungszusammensetzung nach einem der vorstehenden Ansprüche,

a. wobei der (halb)kristalline Vorläufer P entsprechend zwischen 10 und 100 Äquivalent-% der Summe von P und T darstellt,
b. wobei vorzugsweise die Menge von Hemmstoff T 20 - 400 Äqu.-%, vorzugsweise 30 - 300 Äqu.-%, der Menge von P beträgt,
c. wobei vorzugsweise das Verhältnis der Äquivalentmenge von C zu der Summe der Menge von P und T mindestens 0,5, vorzugsweise mindestens 0,8, stärker bevorzugt mindestens 1 und vorzugsweise höchstens 3, stärker bevorzugt höchstens 2 beträgt,
d. wobei das Verhältnis von C zu T vorzugsweise mindestens 1, vorzugsweise mindestens 1,5, am stärksten bevorzugt mindestens 2 beträgt.

**14.** Pulverbeschichtungszusammensetzung nach einem der vorstehenden Ansprüche, wobei die vernetzbare Donorkomponente A und/oder die Akzeptorkomponente B (halb)kristalline Verbindungen sind, die vorzugsweise eine Urethan-Hauptkette aufweisen, wobei die Urethan-Hauptkette vorzugsweise durch Umsetzen eines Hexamethylendiisocyanats mit einer Verbindung, die mindestens zwei Isocyanat-reaktive Gruppen, vorzugsweise einen Alkohol umfasst und stärker bevorzugt ein Diol ist, hergestellt wird.

**15.** Pulverbeschichtungszusammensetzung nach Anspruch 14, wobei die Urethan-Hauptkette der (halb)kristallinen Donorkomponente A und/oder des (halb)kristallinen Akzeptors B und des (halb)kristallinen Vorläufers (P) eine Urethan-Hauptkette aufweisen, die durch Umsetzen von HDI mit mindestens einer Verbindung (i) mit mindestens zwei Isocyanat-reaktiven Gruppen, die für den (halb)kristallinen Vorläufer (P) und die (halb)kristalline Donorkomponente A und/oder den (halb)kristallinen Akzeptor B dieselbe ist, hergestellt wird,
wobei Verbindung (i) vorzugsweise ein Diol ist, wobei das Diol:

eine Verbindungskette zwischen den Hydroxylgruppen, die Ether- oder Thioethergruppen, vorzugsweise -CH2-O-CH2-, -CH2-S-CH2-, -CH2-S-S-CH2-, enthält, wobei die Verbindungskette eine maximale Länge von 11 Kohlenstoffatomen und/oder Heteroatomen zwischen den Hydroxylgruppen hat; oder
eine Verbindungskette zwischen den Hydroxylgruppen, die eine -CH(CH3)-Einheit oder ein -CH(CH2CH3)- vorzugsweise in einer zentralen Position enthält, wobei die Verbindungskette eine Kettenlänge hat, die eine ungerade Anzahl von Kohlenstoffatomen und/oder Heteroatomen von kleiner als 6 zwischen den Hydroxylgruppen aufweist,
aufweist;
wobei die Hydroxylgruppen primäre Hydroxylgruppen sind und wobei die Diole nicht aromatisch und nicht cycloaliphatisch sind

**16.** Pulverbeschichtungszusammensetzung nach einem der vorstehenden Ansprüche, wobei

a. die vernetzbare Komponente A mindestens 2 saure C-H-Donorgruppen in aktiviertem Methylen oder Methin in einer Struktur Z1(-C(-H)(-R)-)Z2 umfasst, wobei R Wasserstoff, ein Kohlenwasserstoff, ein Oligomer oder ein Polymer ist und wobei Z1 und Z2 dieselben oder verschiedene elektronenziehende Gruppen sind, die vorzugsweise aus Keto-, Ester- oder Cyano- oder Arylgruppen ausgewählt sind, und vorzugsweise ein aktiviertes C-H-Derivat mit einer Struktur gemäß Formel 1 umfasst:

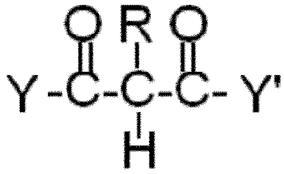

Formel 1,

wobei R Wasserstoff oder ein gegebenenfalls substituiertes Alkyl oder Aryl ist und Y und Y' identische oder verschiedene Substituentengruppen sind, vorzugsweise Alkyl, Aralkyl oder Aryl oder Alkoxy oder wobei in Formel 1 -C(=O)-Y und/oder -C(=O)-Y' durch CN oder Aryl, aber nicht mehr als ein Aryl ersetzt sind, oder wobei Y oder Y' NRR' sein können (R und R' sind H oder gegebenenfalls substituiertes Alkyl), aber vorzugsweise nicht beide, wobei R, Y oder Y' gegebenenfalls eine Verbindung zu einem Oligomer oder Polymer bereitstellen, wobei Komponente A vorzugsweise eine Malonat-, Acetoacetat-, Malonamid-, Acetoacetamid- oder Cyanoacetatgruppe ist, die vorzugsweise mindestens 50, vorzugsweise 60, 70 oder sogar 80 % aller sauren C-H-Gruppen in der vernetzbaren Komponente A bereitstellt,
b. Komponente B die mindestens 2 aktivierten ungesättigten RMA-Akzeptorgruppen umfasst, die vorzugsweise aus Acryloyl-, Methacryloyl-, Itaconat-, Maleat- oder Fumaratfunktionellen Gruppen stammen,

wobei vorzugsweise mindestens eine, stärker bevorzugt beide von Komponente A oder B ein Polymer ist/sind und
wobei vorzugsweise die Zusammensetzung eine Gesamtmenge von Donorgruppen C-H und Akzeptorgruppen C=C pro Gramm Bindemittelfestoffen von 0,05 bis 6 mÄuq./g Bindemittelfestoffe umfasst und vorzugsweise das Verhältnis von Akzeptorgruppen C=C zu Donorgruppen C-H größer als 0,1 und kleiner als 10 ist.

**17.** Pulverbeschichtungszusammensetzung nach einem der vorstehenden Ansprüche, wobei mindestens eine der vernetzbaren Komponenten A oder B oder Hybrid A/B ein Polymer ist, das vorzugsweise aus der Gruppe von Acryl-, Polyester-, Polyesteramid-, Polyesterurethanpolymeren ausgewählt ist, wobei das Polymer

- ein zahlenmittleres Molekulargewicht Mn, bestimmt mit GPC, von mindestens 450 g/mol, vorzugsweise mindestens 1.000, stärker bevorzugt mindestens 1.500 und am stärksten bevorzugt mindestens 2.000 g/mol aufweist;
- ein gewichtsmittleres Molekulargewicht Mw, bestimmt mit GPC, von höchstens 20.000 g/mol, vorzugsweise höchstens 15.000, stärker bevorzugt höchstens 10.000 und am stärksten bevorzugt höchstens 7.500 g/mol aufweist;
- vorzugsweise eine Polydispersität Mw/Mn unter 4, stärker bevorzugt unter 3 aufweist;
- ein Äquivalentgewicht EQW in C-H oder C=C von mindestens 150, 250, 350, 450 oder 550 g/mol und vorzugsweise höchstens 2.500, 2.000, 1.500,1.250 oder 1.000 g/mol und eine zahlenmittlere Funktionalität

von reaktiven Gruppen C-H oder C=C zwischen 1 und 25, stärker bevorzugt 1,5 und 15, noch stärker bevorzugt 2 und 15, am stärksten bevorzugt 2,5 und 10 C-H-Gruppen pro Molekül aufweist;

- vorzugsweise eine Schmelzviskosität bei einer Temperatur im Bereich zwischen 100 und 140 °C von weniger als 60 Pas, stärker bevorzugt weniger als 40, 30, 20, 10 oder sogar 5 Pas aufweist;
- vorzugsweise Amid-, Harnstoff- oder Urethanbindungen umfasst und/oder Monomere mit hoher Tg, vorzugsweise cycloaliphatische oder aromatische Monomere, insbesondere Polyestermonomere, ausgewählt aus der Gruppe von 1,4-Dimethylolcyclohexan (CHDM), Tricyclodecandimethanol (TCD-Diol), Isosorbid, Pentaspiroglycol oder hydriertem Bisphenol A und Tetramethylcyclobutandiol, umfasst; und/oder
- eine Tg über 25 °C, vorzugsweise über 35 °C, stärker bevorzugt über 40, 50 oder sogar 60 °C als der Mittelpunktwert, bestimmt mittels DSC bei einer Erwärmungsgeschwindigkeit von 10 °C/min, aufweist oder ein (halb)kristallines Polymer mit einer Schmelztemperatur zwischen 40 °C und 150, vorzugsweise 130 °C, vorzugsweise mindestens 50 oder sogar 70 °C und vorzugsweise niedriger als 120 °C (bestimmt mittels DSC bei einer Erwärmungsgeschwindigkeit von 10 °C/min) ist.

**18.** Pulverbeschichtungszusammensetzung nach einem der vorstehenden Ansprüche, wobei die Akzeptorkomponente B ein Polyester(meth-)acrylat, ein Polyesterurethan(meth-)acrylat, ein Epoxy(meth-)acrylat oder ein Urethan(meth-)acrylat oder ein Polyester, der Fumarat-, Maleat- oder Itaconateinheiten, vorzugsweise Fumarat umfasst, oder ein Polyester, der mit einer Isocyanat- oder Epoxy-funktionellen aktivierten ungesättigten Gruppe endgruppengeschützt ist, ist.

**19.** (Halb)kristalliner Katalysatorhemmstoff T oder Vorläufer P, der zur Verwendung in einem Katalysatorsystem zum Vernetzen einer vernetzbaren Zusammensetzung über echte Michael-Additions-(RMA)-Reaktion unter Erhalt einer Pulverbeschichtungszusammensetzung nach einem der Ansprüche 1-18 geeignet ist, wobei der Katalysatorhemmstoff T und/oder Vorläufer P durch:

(ia) Umsetzen von HDI mit einer Verbindung (i), die ein Diol ist, und einer Verbindung (ii), die eine Hydroxylcarbonsäuregruppe umfasst, unter Erhalt eines Carbonsäure-basierten (halb)kristallinen Hemmstoffes T;
(ib) Neutralisieren des Carbonsäure-basierten (halb)kristallinen Hemmstoffes T unter Erhalt eines (halb)kristallinen Vorläufers P; oder
(iia) Umsetzen von HDI mit einer Verbindung (i), die ein Diol ist, unter Erhalt eines Hydroxyl-terminierten Urethan-Zwischenproduktes;
(iib) Umsetzen des Hydroxylurethan-Zwischenproduktes mit einem cyclischen Anhydrid unter Erhalt eines Carbonsäure-basierten (halb)kristallinen Hemmstoffes T;
(iic) Neutralisieren des Carbonsäure-basierten (halb)kristallinen Hemmstoffes T unter Erhalt eines (halb)kristallinen Vorläufers P; oder
(iiia) Umsetzen von HDI mit einer Verbindung (i), die ein Diol ist, und einer Verbindung (iii) mit einer Hydroxylcarboxylatestergruppe unter Erhalt eines (halb)kristallinen Urethanesters;
(iiib) Hydrolysieren der Estergruppen des (halb)kristallinen Urethanesters mit einem Hydroxid unter Erhalt eines (halb)kristallinen Vorläufers P;
(iiic) gegebenenfalls Ansäuern des (halb)kristallinen Vorläufers von (iiib) unter Erhalt eines kristallinen Hemmstoffes T;
(iva) Umsetzen von HDI mit einer Diolkomponente (i) und einer Verbindung (iv), die eine Hydroxyl- und eine tertiäres Amin-funktionelle Gruppe umfasst, unter Erhalt eines tertiäres Amin-basierten (halb)kristallinen Vorläufers P;
(ivb) Protonieren des tertiäres-Amin-basierten (halb)kristallinen Vorläufers P unter Erhalt eines (halb)kristallinen Hemmstoffes T; oder
(va) Umsetzen von HDI mit Diolkomponente (i) und einer Verbindung (v), die eine Hydroxyl- und eine Acrylat-funktionelle Gruppe umfasst, unter Erhalt eines Acrylat-funktionellen (halb)kristallinen Zwischenproduktes;
(vb) Umsetzen der Acrylatgruppen des Acrylat-funktionellen (halb)kristallinen Zwischenproduktes mit einem sekundären Amin unter Erhalt eines tertiäres Aminfunktionellen halbkristallinen Vorläufers P;
(vc) Protonieren des tertiäres-Amin-basierten (halb)kristallinen Vorläufers P unter Erhalt eines (halb)kristallinen Hemmstoffes T
hergestellt werden.

**20.** (Halb)kristalliner Katalysatorhemmstoff T oder Vorläufer P nach Anspruch 19, wobei der (halb)kristalline Vorläufer und/oder (halb)kristalline Hemmstoff eine Schmelztemperatur der Verbindung selbst aufweisen, die unter 145 °C, 130 °C, vorzugsweise unter 120 °C, 110 °C oder sogar unter 100 °C, wie zwischen 80 und 130 °C, vorzugsweise zwischen 80 und 120 °C liegt.

**21.** (Halb)kristalliner Katalysatorhemmstoff T oder (halb)kristalliner Vorläufer P nach Anspruch 19 oder 20 mit den in einem der Ansprüche 1 bis 18 spezifizierten Merkmalen.

**22.** Verfahren zum Pulverbeschichten eines Substrats, umfassend

a. Aufbringen einer Schicht, die die Pulverbeschichtungszusammensetzung nach einem der Ansprüche 1 - 18 umfasst, auf eine Substratoberfläche, wobei das Substrat vorzugsweise ein temperaturempfindliches Substrat, vorzugsweise MDF, Holz, Kunststoff, Verbundstoff oder temperaturempfindliche Metallsubstrate wie Legierungen ist und
b. Erwärmen auf eine Härtungstemperatur $T_{Härt}$ zwischen 75 und 140 °C und stärker bevorzugt zwischen 80 und 130, 120, 110 oder sogar 100 °C, vorzugsweise unter Verwendung von Infraroterwärmen, wobei die Schmelzviskosität bei der Härtungstemperatur $T_{Härt}$ vorzugsweise weniger als 60 Pas, stärker bevorzugt weniger als 40, 30, 20, 10 oder sogar 5 Pas beträgt;
c. und Härten bei $T_{Härt}$ für eine Härtungszeit von vorzugsweise weniger als 40, 30, 20, 15, 10 oder sogar 5 Minuten.

**23.** Gegenstände, die mit einem Pulver mit der Pulverbeschichtungszusammensetzung nach Anspruch 1 - 18 beschichtet sind, wobei die Gegenstände vorzugsweise ein temperaturempfindliches Substrat, das vorzugsweise aus der Gruppe von MDF, Holz, Kunststoff, Verbundstoff oder Metalllegierungen ausgewählt ist, aufweisen und wobei vorzugsweise die Vernetzungsdichte XLD mindestens 0,01, vorzugsweise mindestens 0,02, 0,04, 0,07 oder sogar 0,1 mmol/ml (bestimmt mit DMTA) und vorzugsweise weniger als 3, 2, 1,5, 1 oder sogar 0,7 mmol/ml beträgt.

## Revendications

**1.** Composition de revêtement en poudre comprenant une composition réticulable et un système de catalyseur, dans laquelle la composition réticulable est formée par un composant donneur réticulable A et un composant accepteur réticulable B qui sont réticulables par une réaction d'addition de Michael réelle (RMA) via le système de catalyseur, et lequel système de catalyseur est capable de catalyser la réaction de réticulation de RMA à une température de durcissement inférieure à 140 °C, de préférence inférieure à 120 °C ou encore plus préférablement inférieure à 110 °C ou inférieure à 100 °C et de préférence d'au moins 70 °C, de préférence d'au moins 80, 90 ou 100 °C,

dans laquelle la composition réticulable comprend

a) le composant donneur réticulable A ayant au moins 2 groupes donneurs à C-H acide dans le méthylène ou méthine activé, et
b) le composant accepteur réticulable B ayant au moins 2 groupes accepteurs C=C insaturés activés, qui réagissent avec le composant A par addition de Michael réelle (RMA) pour former un réseau réticulé, et

dans laquelle le système de catalyseur comprend un précurseur (semi)cristallin P, un activateur C et éventuellement un retardateur T ;
dans laquelle le précurseur (semi)cristallin P est une base faible avec un pKa de sa forme protonée de plus de 2, de préférence de plus de 3, plus préférablement de plus de 4 et encore plus préférablement d'au moins 5 unités plus bas que celui des groupes C-H activés dans le composant donneur A ; et l'activateur C peut réagir avec P à la température de durcissement, produisant une base forte (CP) qui peut catalyser la réaction d'addition de Michael entre A et B ;
dans laquelle le retardateur T est de préférence un retardateur (semi)cristallin, dans laquelle le retardateur T est un acide qui a un pKa de plus de 2, plus préférablement de plus de 3, encore plus préférablement de plus de 4 ou 5 points plus bas que celui du C-H activé dans A, et qui, lors de la déprotonation, produit une base faible qui peut réagir avec l'activateur C, produisant une base forte qui peut catalyser la réaction d'addition de Michael entre les compositions réticulables A et B.

**2.** Composition de revêtement en poudre selon la revendication 1, dans laquelle le précurseur (semi)cristallin et/ou le retardateur (semi)cristallin est partiellement à l'état cristallin et a une température de fusion inférieure à 140, 130 °C, de préférence inférieure à 120 °C, 110 °C ou même inférieure à 100 °C, et lequel précurseur et/ou retardateur comprend un squelette d'uréthane.

**3.** Composition de revêtement en poudre selon l'une quelconque des revendications 1 ou 2, dans laquelle le précurseur

(semi)cristallin P et/ou le retardateur (semi)cristallin T a un squelette d'uréthane préparé en faisant réagir un diisocyanate d'hexaméthylène (HDI) avec au moins un composé (i) comprenant au moins deux, de préférence deux, groupes réactifs avec les isocyanates, de préférence hydroxyle, et est plus préférablement un diol.

**4.** Composition de revêtement en poudre selon l'une quelconque des revendications précédentes, dans laquelle le retardateur (semi)cristallin T et/ou le précurseur P comprennent un squelette d'uréthane et est préparé par

(ia) mise en réaction d'HDI avec un composé (i) qui est un diol et un composé (ii) comprenant un hydroxyle et un groupe fonctionnel acide carboxylique pour obtenir un retardateur (semi)cristallin T à base d'acide carboxylique ;
(ib) neutralisation du retardateur (semi)cristallin T à base d'acide carboxylique pour obtenir un précurseur (semi) cristallin P ; ou
(iia) mise en réaction d'HDI avec un excès stoechiométrique du composé (i) qui est un diol pour obtenir un intermédiaire uréthane à terminaison hydroxyle ;
(iib) mise en réaction de l'intermédiaire hydroxyle uréthane avec un anhydride cyclique pour obtenir un retardateur (semi)cristallin T à base d'acide carboxylique ;
(iic) neutralisation du retardateur (semi)cristallin T à base d'acide carboxylique pour obtenir un précurseur (semi) cristallin P ; ou
(iiia) mise en réaction d'HDI avec un composé (i) qui est un diol et un composé (iii) ayant un hydroxyle et groupe fonctionnel ester de carboxylate pour obtenir un ester d'uréthane (semi)cristallin ;
(iiib) hydrolyse des groupes ester de l'ester d'uréthane (semi)cristallin avec un hydroxyde pour obtenir un précurseur (semi)cristallin P ;
(iiic) éventuellement acidification du précurseur (semi)cristallin de (iiib) pour obtenir un retardateur cristallin T ;
(iva) mise en réaction d'HDI avec le composé (i) qui est un diol et un composé (iv) comprenant un hydroxyle et groupe fonctionnel amine tertiaire pour obtenir un précurseur (semi)cristallin P à base d'amine tertiaire ;
(ivb) protonation du précurseur (semi)cristallin P à base d'amine tertiaire pour obtenir un retardateur (semi) cristallin T ; ou
(va) mise en réaction d'HDI avec le composé (i) qui est un diol et un composé (v) comprenant un hydroxyle et un groupe fonctionnel acrylate pour obtenir un intermédiaire (semi)cristallin à fonction acrylate ;
(vb) mise en réaction des groupes acrylate de l'intermédiaire (semi)cristallin à fonction acrylate avec une amine secondaire pour obtenir un précurseur semi-cristallin P à fonction amine tertiaire ;
(vc) protonation du précurseur (semi)cristallin P à base d'amine tertiaire pour obtenir un retardateur (semi) cristallin T.

**5.** Composition de revêtement en poudre selon l'une quelconque des revendications précédentes, dans laquelle le précurseur (semi)cristallin P est préparé selon la revendication 4, dans laquelle l'hydrolyse et/ou la neutralisation est effectuée avec

• un sel hydroxyde d'un cation qui n'est pas acide, de préférence un cation selon la formule Y(R')4, dans laquelle Y représente N ou P, et dans laquelle chaque R' peut être alkyle, aryle ou aralkyle aussi identique ou différent que possible lié à un polymère, de préférence un cation ammonium ou phosphonium quaternaire, de préférence un cation tétra-butylammonium ou un cation tétra-éthylammonium ; ou
• une amine basique très forte, de préférence choisie dans le groupe des amidines ; de préférence le 1,8-diazabicyclo (5.4.0)undéc-7-ène (DBU), ou les guanidines ; de préférence la 1,1,3,3-tétraméthylguanidine (TMG), éventuellement en présence d'une certaine quantité d'eau.

**6.** Composition de revêtement en poudre selon l'une quelconque des revendications précédentes, dans laquelle le diol (i) a :

une chaîne de liaison entre les groupes hydroxyle qui contiennent des groupes éther- ou thioéther, de préférence -CH2-O-CH2-, -CH2-S-CH2-, -CH2-S-S-CH2- et la chaîne de liaison a une longueur maximale de 11 atomes de carbone et/ou hétéroatomes entre les groupes hydroxyle ; ou
une chaîne de liaison entre les groupes hydroxyle contenant une unité -CH(CH3)- ou un -CH(CH2CH3)- de préférence en position centrale, la chaîne de liaison ayant une longueur de chaîne qui présente un nombre impair d'atomes de carbone et/ou d'hétéroatomes inférieur à 6 entre les groupes hydroxyle ;
dans laquelle les groupes hydroxyle sont des groupes hydroxyle primaires et dans laquelle les diols ne sont pas aromatiques et pas cycloaliphatiques.

**7.** Composition de revêtement en poudre selon l'une quelconque des revendications 3 à 6, dans laquelle le composé (i)

comprenant au moins deux groupes réactifs avec les isocyanates est un diol choisi dans le groupe constitué par le diéthylèneglycol ; le triéthylèneglycol ; le 3-méthyl-1,5-pentanediol ; le 2-méthyl-1,3-propanediol ; le 2,2'-thio-diéthanol ; le 2,2'-dithio-diéthanol ; le tétraéthylène glycol ; le di-1,3-propanediol) ; le di(1,4-butanediol).

**8.** Composition de revêtement en poudre selon l'une quelconque des revendications 3 à 7, dans laquelle le rapport des groupes réactifs avec les isocyanates du composé (i) et, le cas échéant, du composé (ii), (iii), (iv) ou (v) par rapport aux groupes isocyanates est de préférence supérieur à un, plus préférablement le rapport molaire des groupes réactifs avec les isocyanates sur les groupes isocyanates est compris entre 1,0 et 1,5, plus préférablement de 1,01 à 1,2.

**9.** Composition de revêtement en poudre selon l'une quelconque des revendications précédentes, dans laquelle le poids moléculaire moyen en nombre du retardateur (semi)cristallin est compris entre 300 et 4 000, de préférence entre 500 et 3 000, plus préférablement entre 1 000 et 2 000 g/mole.

**10.** Composition de revêtement en poudre selon l'une quelconque des revendications précédentes, dans laquelle le système de catalyseur est un système de catalyseur séparé dans laquelle le précurseur (semi)cristallin P et l'activateur C sont macrophysiquement séparés.

**11.** Composition de revêtement en poudre selon l'une quelconque des revendications précédentes, dans laquelle

- l'activateur C est choisi dans le groupe constitué par les composants fonctionnalisés par époxyde, carbodiimide, oxétane, oxazoline ou aziridine, de préférence un époxyde ou carbodiimide ; et
- le précurseur (semi)cristallin P est un carboxylate ou une amine tertiaire ; et
- de préférence, le retardateur T est un précurseur P protoné.

**12.** Composition de revêtement en poudre selon l'une quelconque des revendications précédentes, comprenant

- un activateur C en une quantité comprise entre 1 et 600 µéq/g, de préférence entre 10 et 400, plus préférablement entre 20 et 200 µéq/g par rapport au poids total des composants A et B du liant et du système de catalyseur,
- un précurseur (semi)cristallin P en une quantité comprise entre 1 et 300 µéq/g, de préférence entre 10 et 200, plus préférablement entre 20 et 100 µéq/g par rapport au poids total des composants A et B du liant et du système de catalyseur,
- éventuellement un retardateur T en une quantité comprise entre 1 et 500, de préférence entre 10 et 400, plus préférablement entre 20 et 300 µéq/g et le plus préférablement entre 30 et 200 µéq/g, par rapport au poids total des composants A et B du liant et du système de catalyseur
- de préférence dans laquelle la quantité équivalente de C

  (i) est supérieure à la quantité de T, lorsqu'il est présent, de préférence d'une quantité comprise entre 1 et 300 µéq/g, de préférence entre 10 et 200, plus préférablement entre 20 et 100 µéq/g et
  (ii) est de préférence supérieure à la quantité de P et
  (iii) plus préférablement supérieure à la somme de la quantité de P et de T.

**13.** Composition de revêtement en poudre selon l'une quelconque des revendications précédentes,

a. dans laquelle le précurseur (semi)cristallin P représente respectivement entre 10 et 100 % équivalents de la somme de P et de T,
b. de préférence, la quantité de retardateur T est de 20 à 400 éq%, de préférence de 30 à 300 éq% de la quantité de P,
c. dans laquelle, de préférence, le rapport de la quantité équivalente de C sur la somme de la quantité de P et de T est d'au moins 0,5, de préférence d'au moins 0,8, plus préférablement d'au moins 1 et de préférence d'au plus 3, plus préférablement d'au plus 2,
d. le rapport de C sur T est de préférence d'au moins 1, de préférence d'au moins 1,5, le plus préférablement d'au moins 2.

**14.** Composition de revêtement en poudre selon l'une quelconque des revendications précédentes, dans laquelle le composant donneur réticulable A et/ou le composant accepteur B sont des composés (semi)cristallins, de préférence ayant un squelette d'uréthane, lequel squelette d'uréthane est de préférence préparé en faisant réagir un diisocyanate d'hexaméthylène avec un composé comprenant au moins deux groupes réactifs avec les isocyanates, de

préférence un alcool, et est plus préférablement un diol.

**15.** Composition de revêtement en poudre selon la revendication 14, dans laquelle le squelette d'uréthane du composant donneur (semi)cristallin A et/ou de l'accepteur (semi)cristallin B et le précurseur (semi)cristallin (P) ont un squelette d'uréthane préparé en faisant réagir HDI avec au moins un composé (i) ayant au moins deux groupes réactifs avec les isocyanates, qui est le même pour le précurseur (semi)cristallin (P) et le composant donneur (semi) cristallin A et/ou l'accepteur (semi)cristallin B,
lequel composé (i) est de préférence un diol, lequel diol a :

une chaîne de liaison entre les groupes hydroxyle qui contiennent des groupes éther- ou thioéther, de préférence -CH2-O-CH2-, -CH2-S-CH2-, -CH2-S-S-CH2- et la chaîne de liaison a une longueur maximale de 11 atomes de carbone et/ou hétéroatomes entre les groupes hydroxyle ; ou
une chaîne de liaison entre les groupes hydroxyle contenant une unité -CH(CH3)- ou un -CH(CH2CH3)- de préférence en position centrale, la chaîne de liaison ayant une longueur de chaîne qui présente un nombre impair d'atomes de carbone et/ou d'hétéroatomes inférieur à 6 entre les groupes hydroxyle ;
dans laquelle les groupes hydroxyle sont des groupes hydroxyle primaires et dans laquelle les diols ne sont pas aromatiques et pas cycloaliphatiques.

**16.** Composition de revêtement en poudre selon l'une quelconque des revendications précédentes, dans laquelle a. le composant réticulable A comprend au moins 2 groupes donneurs à C-H acide dans le méthylène ou méthine activé dans une structure Z1(-C(-H)(-R)-)Z2 dans laquelle R est hydrogène, un hydrocarbure, un oligomère ou un polymère, et dans laquelle Z1 et Z2 sont des groupes attracteurs d'électrons identiques ou différents, de préférence choisis parmi des groupes céto, ester ou cyano ou aryle, et comprend de préférence un dérivé à C-H activé ayant une structure selon la formule 1 :

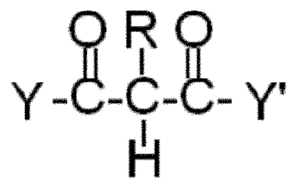

Formule 1

dans laquelle R est hydrogène ou un alkyle ou aryle éventuellement substitué et Y et Y' sont des groupes substituants identiques ou différents, de préférence alkyle, aralkyle ou aryle, ou alcoxy ou dans laquelle dans la formule 1, -C(=O)-Y et/ou -C(=O)-Y' est remplacé par CN ou aryle, pas plus d'un aryle ou dans laquelle Y ou Y' peut être NRR' (R et R' sont H ou alkyle éventuellement substitué) mais de préférence pas les deux, dans laquelle R, Y ou Y' fournissent éventuellement une liaison à un oligomère ou polymère, ledit composant A étant de préférence un groupe malonate, acétoacétate, malonamide, acétoacétamide ou cyanoacétate, fournissant de préférence au moins 50, de préférence 60, 70 ou même 80 % du total des groupes à C-H acide dans le composant réticulable A,
b. le composant B comprend les au moins deux groupes accepteurs de RMA insaturés activés provenant de préférence de groupes fonctionnels acryloyle, méthacryloyle, itaconates, maléate ou fumarate,
dans laquelle de préférence, au moins l'un, de préférence les deux, des composants A ou B est un polymère et dans laquelle de préférence, la composition comprend une quantité totale de groupes donneurs à C-H et de groupes accepteurs C=C par gramme de solides de liant de 0,05 à 6 méq/g de solides de liant et, de préférence, le rapport des groupes accepteurs C=C sur les groupes donneurs à C-H est supérieur à 0,1 et inférieur à 10.

**17.** Composition de revêtement en poudre selon l'une quelconque des revendications précédentes, dans laquelle au moins l'un des composants réticulables A ou B ou hybride A/B est un polymère, de préférence choisi dans le groupe des polymères acryliques, polyester, polyester amide, polyester-uréthane, lequel polymère

- a un poids moléculaire moyen en nombre Mn, tel que déterminé par GPC, d'au moins 450 g/mole, de préférence d'au moins 1 000, plus préférablement d'au moins 1 500 et le plus préférablement d'au moins 2 000 g/mole ;
- a une masse moléculaire moyenne en poids Mw, telle que déterminée par GPC, d'au plus 20 000 g/mole, de préférence d'au plus 15 000, plus préférablement d'au plus 10 000 et le plus préférablement d'au plus 7 500 g/mole ;

• présente de préférence une polydispersité Mw/Mn inférieure à 4, plus préférablement inférieure à 3 ;
• a un poids équivalent EQW dans C-H ou C=C d'au moins 150, 250, 350, 450 ou 550 g/mole et de préférence d'au plus 2 500, 2 000, 1 500, 1 250 ou 1 000 g/mole et une fonctionnalité moyenne en nombre des groupes réactifs C-H ou C=C comprise entre 1 et 25, plus préférablement entre 1,5 et 15, encore plus préférablement entre 2 et 15, le plus préférablement entre 2,5 et 10 groupes C-H par molécule ;
• présente de préférence une viscosité à l'état fondu à une température dans la plage entre 100 et 140 °C inférieure à 60 Pas, plus préférablement inférieure à 40, 30, 20, 10 ou même 5 Pas ;
• de préférence comprend des liaisons amide, urée ou uréthane et/ou comprend des monomères à Tg haute, de préférence des monomères cycloaliphatiques ou aromatiques, en particulier des monomères de polyester choisis dans le groupe 1,4-diméthylol cyclohexane (CHDM), tricyclodécanediméthanol (TCD diol), isosorbide, pentaspiroglycol ou bisphénol A hydrogéné et tétraméthylcyclobutanediol ; et/ou
• a une Tg supérieure à 25 °C, de préférence supérieure à 35 °C, plus préférablement supérieure à 40, 50 ou même 60 °C comme la valeur médiane déterminée par DSC à une vitesse de chauffage de 10 °C/min ou est un polymère (semi) cristallin ayant une température de fusion comprise entre 40 °C et 150 °C, de préférence 130°C, de préférence au moins 50 ou même 70 °C et de préférence inférieure à 120 °C (comme déterminée par DSC à une vitesse de chauffage de 10 °C/min).

**18.** Composition de revêtement en poudre selon l'une quelconque des revendications précédentes, dans laquelle le composant accepteur B est un (méth)acrylate de polyester, un (méth)acrylate de polyester uréthane, un (méth) acrylate d'époxy ou un (méth)acrylate d'uréthane, ou est un polyester comprenant des motifs fumarate, maléate ou itaconate, de préférence fumarate ou est un polyester coiffé en terminaison par un groupe insaturé activé fonctionnalisé par isocyanate ou époxy.

**19.** Retardateur T ou précurseur P de catalyseur (semi)cristallin approprié pour une utilisation dans un système de catalyseur pour réticuler une composition réticulable par une réaction d'addition de Michael réelle (RMA) pour obtenir une composition de revêtement en poudre selon l'une quelconque des revendications 1 à 18, dans lequel le retardateur T et/ou le précurseur P de catalyseur est préparé par :

(ia) mise en réaction d'HDI avec un composé (i) qui est un diol et un composé (ii) comprenant des groupes acide hydroxylcarboxylique pour obtenir un retardateur (semi)cristallin T à base d'acide carboxylique ;
(ib) neutralisation du retardateur (semi)cristallin T à base d'acide carboxylique pour obtenir un précurseur (semi) cristallin P ; ou
(iia) mise en réaction d'HDI avec un composé (i) qui est un diol pour obtenir un intermédiaire uréthane à terminaison hydroxyle ;
(iib) mise en réaction de l'intermédiaire hydroxyluréthane avec un anhydride cyclique pour obtenir un retardateur (semi)cristallin T à base d'acide carboxylique ;
(iic) neutralisation du retardateur (semi)cristallin T à base d'acide carboxylique pour obtenir un précurseur (semi) cristallin P ; ou
(iiia) mise en réaction d'HDI avec un composé (i) qui est un diol et un composé (iii) ayant des groupes ester d'hydroxylcarboxylate pour obtenir un ester d'uréthane (semi)cristallin ;
(iiib) hydrolyse des groupes ester de l'ester d'uréthane (semi)cristallin avec un hydroxyde pour obtenir un précurseur (semi)cristallin P ;
(iiic) éventuellement acidification du précurseur (semi)cristallin de (iiib) pour obtenir un retardateur cristallin T
(iva) mise en réaction d'HDI avec un composant diol (i) et un composé (iv) comprenant un hydroxyle et un groupe fonctionnel amine tertiaire pour obtenir un précurseur (semi)cristallin P à base d'amine tertiaire ;
(ivb) protonation du précurseur (semi)cristallin P à base d'amine tertiaire pour obtenir un retardateur (semi) cristallin T ; ou
(va) mise en réaction d'HDI avec un composant diol (i) et un composé (v) comprenant un hydroxyle et un groupe fonctionnel acrylate pour obtenir un intermédiaire (semi)cristallin à fonction acrylate ;
(vb) mise en réaction des groupes acrylate de l'intermédiaire (semi)cristallin à fonction acrylate avec une amine secondaire pour obtenir un précurseur semi-cristallin P à fonction amine tertiaire ;
(vc) protonation du précurseur (semi)cristallin P à base d'amine tertiaire pour obtenir un retardateur (semi) cristallin T.

**20.** Retardateur T ou précurseur P de catalyseur (semi)cristallin selon la revendication 19, dans lequel le précurseur (semi)cristallin et/ou le retardateur (semi) cristallin ont une température de fusion du composé lui-même qui est inférieure à 145 °C, 130 °C, de préférence inférieure à 120 °C, 110° C ou même inférieure à 100 °C, telle qu'entre 80 et 130 °C, de préférence entre 80 et 120 °C.

**21.** Retardateur T ou précurseur P (semi)cristallin de catalyseur selon la revendication 19 ou 20, ayant les caractéristiques telles que spécifiées dans l'une quelconque des revendications 1 à 18.

**22.** Procédé de revêtement en poudre d'un substrat comprenant

a. l'application d'une couche comprenant la composition de revêtement en poudre selon l'une quelconque des revendications 1 à 18, sur une surface de substrat dans lequel le substrat est de préférence un substrat sensible à la température, de préférence MDF, bois, plastique, composite ou des substrats métalliques sensibles à la température tels que des alliages et
b. le chauffage jusqu'à une température de durcissement Tcur comprise entre 75 et 140 °C, et plus préférablement entre 80 et 130, 120, 110 ou même 100 °C, de préférence par chauffage infrarouge, dans lequel la viscosité à l'état fondu à la température de durcissement Tcur est de préférence inférieure à 60 Pas, plus préférablement inférieure à 40, 30, 20, 10 ou même 5 Pas ;
c. et le durcissement à Tcur pendant un temps de durcissement de préférence inférieur à 40, 30, 20, 15, 10 ou même 5 minutes.

**23.** Articles revêtus par une poudre ayant la composition de revêtement en poudre selon les revendications 1 à 18, dans lesquels les articles ont de préférence un substrat sensible à la température choisi de préférence dans le groupe constitué par MDF, bois, plastique, composite ou alliages métalliques et dans lesquels de préférence la densité de réticulation XLD est d'au moins 0,01, de préférence d'au moins 0,02, 0,04, 0,07 ou même 0,1 mmole/ml (comme déterminée par DMTA) et est de préférence inférieure à 3, 2, 1,5, 1 ou même 0,7 mmole/ml.

**Figure 1**

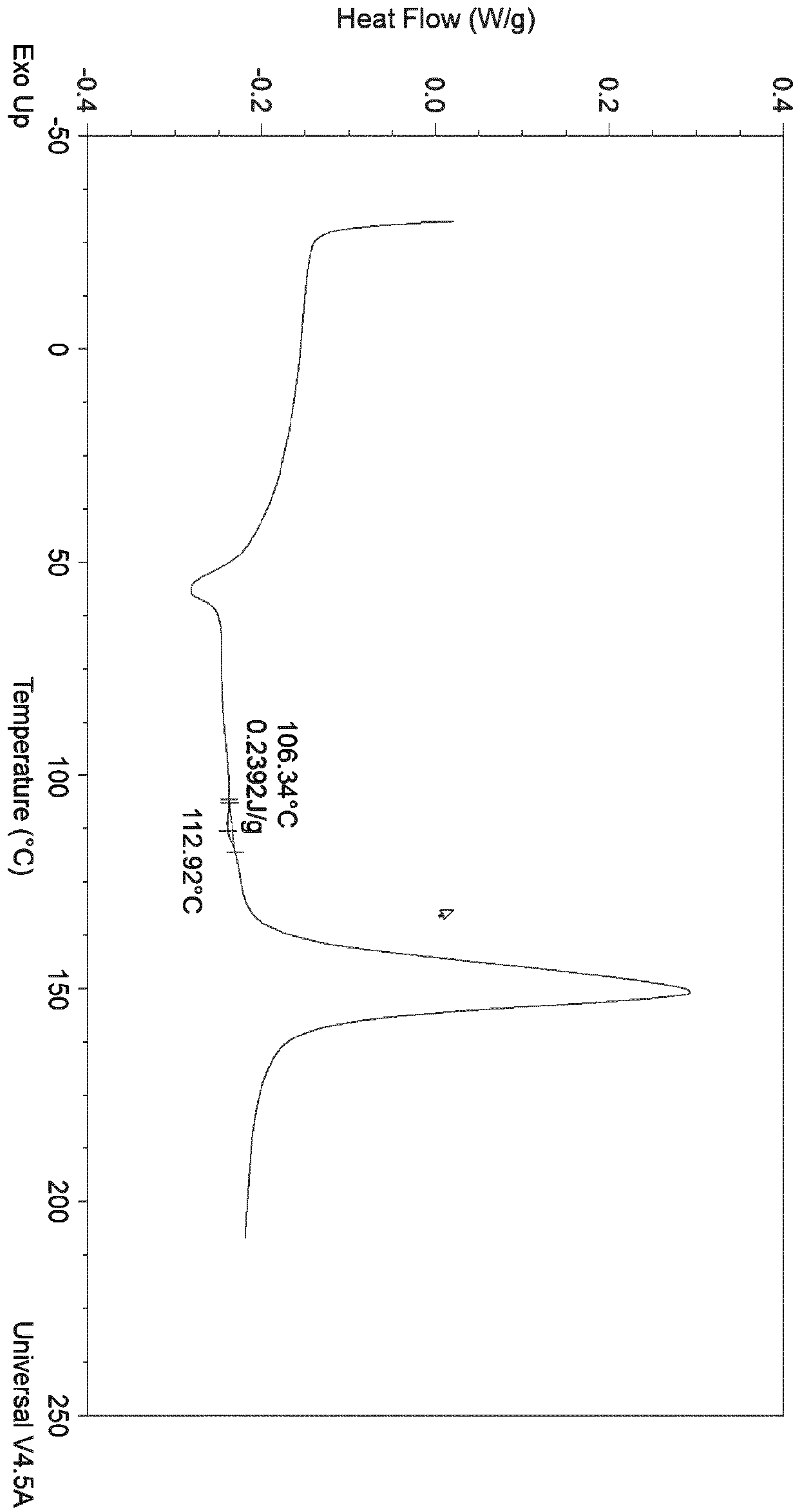
Heat Flow (W/g)
-0.4
-0.2
0.0
0.2
0.4
Exo Up
-50
0
50
100
150
200
250
Temperature (°C)
106.34°C
0.2392J/g
112.92°C
Universal V4.5A

**Figure 2**

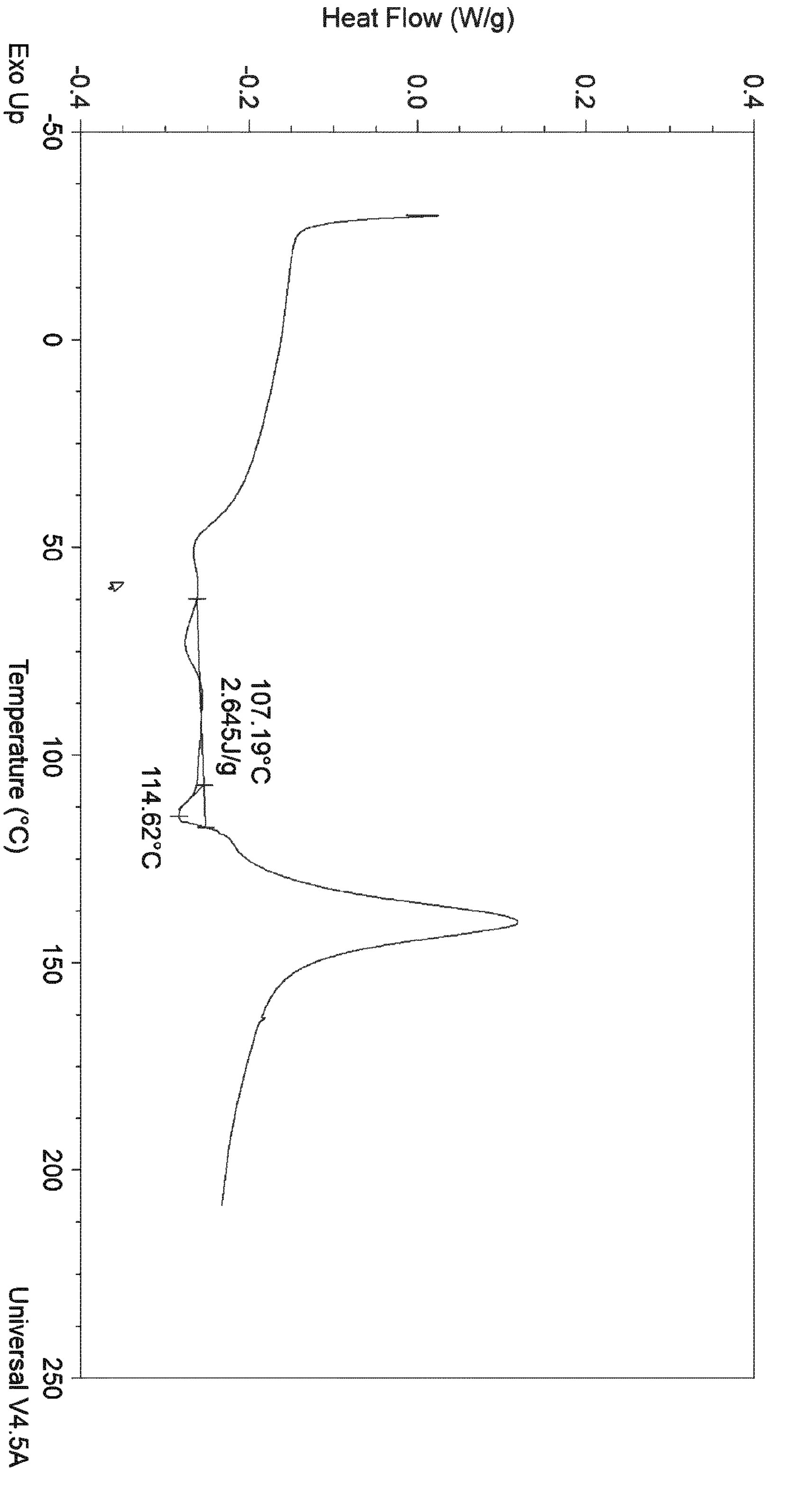
Heat Flow (W/g)
Exo Up
-0.4
-0.2
0.0
0.2
0.4
-50
0
50
100
150
200
250
107.19°C
2.645J/g
114.62°C
Temperature (°C)
Universal V4.5A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019145472 A
- US 2021062009 A
- US 4749728 A
- EP 2556108 A
- EP 0808860 A
- EP 1593727 A
- US 2759913 A
- DE 835809
- US 4871822 A
- US 4602061 A
- US 4408018 A
- US 4217396 A
- EP 0585742 A

### Non-patent literature cited in the description

- *Progress in Organic Coatings*, 2011, vol. 72, 26-33